# EUROPEAN PATENT APPLICATION

(11) **EP 3 151 135 A1**
(43) Date of publication of application: **05.04.2017**
(21) Application number: 16178300.6
(22) Date of filing: 07.07.2016
(51) Int. Cl.: G06F 17/30

(54) **ORGANIZATION AND VISUALIZATION OF CONTENT FROM MULTIPLE MEDIA SOURCES**

(30) Priority: 30.09.2015 US 201514871320
(71) Applicant: The Boeing Company, Chicago, IL 60606-2016 (US)
(72) Inventor: NOGUEIRA, Monica de Lima, CHICAGO, IL, 60606-2016 (US); GREIS, Noel Peyton, CHICAGO, IL, 60606-2016 (US); ARNOLD, William G., CHICAGO, IL, 60606-2016 (US); DISCALA, Aurelio Frank, CHICAGO, IL, 60606-2016 (US); KAM, Royce Hamilton Kwock Fai, CHICAGO, IL, 60606-2016 (US); YANG, Matthew Kanfeng, CHICAGO, IL, 60606-2016 (US); THOMPSON, Holton Stonestreet, CHICAGO, IL, 60606-2016 (US)
(74) Representative: Cabinet Plasseraud

(57) **Abstract**

A method, apparatus, and system for visually representing content in media sources (106). A plurality of vectors (122) is created, by a computer system (102), for the media sources (106) based on content (104) in the media sources (106) and a lexicon (132) built for a selected subject (133). The plurality of vectors (122) include elements that represent matches between base entities in the lexicon (132) and extracted entities from the content (104) in the media sources (106). A visual representation (110) of the content (104) in the media sources (106) based on the plurality of vectors (122) is displayed, by the computer system (102), through a graphical user interface (112) that is configured to enable a user to navigate through the content (104). The visual representation (110) of the content (104) is transformed in real-time, by the computer system (102), based on user input (207) such that changes to the visual representation (110) of the content (104) in the graphical user interface (112) visually track the user navigating through the content (104).

## Description

### BACKGROUND INFORMATION

### 1. Field:

The present disclosure relates generally to managing information and, in particular, to the organization and visualization of content from multiple sources. Still more particularly, the present disclosure relates to a method and apparatus for organizing and visually presenting content from multiple media sources in a manner that enables user-driven navigation through this content.

### 2. Background:

Different types of sources may provide information about different types of businesses. Sources of information include, but are not limited to, online news articles, digital publications, web-based news feeds, online historical records, proprietary business reports, and other types of sources. Analyzing the information provided by these numerous sources of information may be more challenging and time-consuming than desired in certain industries.

For example, without limitation, information related to a particular aerospace product in the aerospace industry may be obtained from hundreds to thousands of articles. Over the lifecycle of the particular aerospace product, the number of articles related to the particular aerospace product may increase from the thousands into the tens of thousands, into the hundreds of thousands, and even into the millions, in some cases.

Over time, organizing the content of this overwhelming number of articles in a manner that enables a user to quickly and easily identify information related to a particular subject may be more difficult and time-consuming than desired using some currently available methods for managing information. Therefore, it would be desirable to have a method and apparatus that take into account at least some of the issues discussed above, as well as other possible issues.

### SUMMARY

In one illustrative embodiment, an apparatus comprises a display module, a vector generator module, and a visualizer module. The display module is implemented in a computer system and configured to display a graphical user interface. The vector generator module is implemented in the computer system and configured to generate a plurality of vectors. The vector generator module generates the plurality of vectors for a plurality of media sources based on content in the plurality of media sources and a lexicon that is built for a selected subject. The plurality of vectors include elements that represent matches between base entities in the lexicon and extracted entities from the content in the plurality of media sources. The visualizer module is implemented in the computer system, coupled to the vector generator module and the display module, and configured to display a visual representation of the content in the plurality of media sources in the graphical user interface. The plurality of vectors and the graphical user interface are configured to enable a user to navigate through the content. The visualizer module is further configured to visually transform the visual representation of the content in the graphical user interface in real-time based on user input.

In another illustrative embodiment, a computer-implemented electronic media content navigation system comprises a display module, a data structure, a vector generator module, and a visualizer module. The display module is implemented in a computer system and configured to display a graphical user interface. The data structure stores a lexicon that is built for a selected subject. The vector generator module is implemented in the computer system and configured to access a plurality of media sources through a computer network and generate a plurality of vectors for the plurality of media sources based on the lexicon and content in the plurality of media sources. The plurality of vectors generated by the vector generator module include elements that represent matches between base entities in the lexicon and extracted entities from the content in the plurality of media sources. The visualizer module is implemented in the computer system, coupled to the vector generator module and the display module, and configured to display a visual representation of the content in the plurality of media sources in the graphical user interface. The plurality of vectors and the graphical user interface are configured to enable a user to navigate through the content. The visualizer module is further configured to visually transform the visual representation of the content in the graphical user interface in real-time based on user input.

In yet another illustrative embodiment, a method is provided for visually representing content in a plurality of media sources. A plurality of vectors is created, by a computer system, for the plurality of media sources based on content in the plurality of media sources and a lexicon built for a selected subject. The plurality of vectors include elements that represent matches between base entities in the lexicon and extracted entities from the content in the plurality of media sources. A visual representation of the content in the plurality of media sources based on the plurality of vectors is displayed, by the computer system, through a graphical user interface that is configured to enable a user to navigate through the content. The visual representation of the content in the graphical user interface is transformed, by the computer system, in real-time based on user input such that changes to the visual representation of the content in the graphical user interface visually track the user navigating through the content.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a content management system in the form of a block diagram in accordance with an illustrative embodiment;
**Figure 2** is an illustration of a content diver and a graphical user interface in the form of a block diagram in accordance with an illustrative embodiment;
**Figure 3** is an illustration of a map manager and a graphical user interface in the form of a block diagram in accordance with an illustrative embodiment;
**Figure 4** is an illustration of a dive interface within a graphical user interface in accordance with an illustrative embodiment;
**Figure 5** is an illustration of a dive interface within a graphical user interface in accordance with an illustrative embodiment;
**Figure 6** is an illustration of a dive interface within a graphical user interface in accordance with an illustrative embodiment;
**Figure 7** is an illustration of a map environment within a graphical user interface in accordance with an illustrative embodiment;
**Figure 8** is an illustration of a zoomed in view of a map in accordance with an illustrative embodiment;
**Figure 9** is an illustration of a tag window displayed in a graphical user interface in accordance with an illustrative embodiment;
**Figure 10** is an illustration of a map environment in a graphical user in accordance with an illustrative embodiment;
**Figure 11** is an illustration of a dashboard in accordance with an illustrative embodiment;
**Figure 12** is an illustration of a customization window displayed over a dashboard in accordance with an illustrative embodiment;
**Figure 13** is an illustration of a dashboard in accordance with an illustrative embodiment;
**Figure 14** is an illustration of a process for visually representing information in the form of a flowchart in accordance with an illustrative embodiment;
**Figure 15** is an illustration of a process for creating a vector for a media source in the form of a flowchart in accordance with an illustrative embodiment;
**Figure 16** is an illustration of a process for displaying a visual representation of content in a plurality of media sources in the form of a flowchart in accordance with an illustrative embodiment;
**Figure 17** is an illustration of a process for transforming a visual representation of content in a graphical user interface in the form of a flowchart in accordance with an illustrative embodiment;
**Figures 18A** and **18B** are illustrations of a process for facilitating user-driven navigation through content in a plurality of media sources in the form of a flowchart in accordance with an illustrative embodiment; and
**Figure 19** is an illustration of a data processing system in the form of a block diagram in accordance with an illustrative embodiment.

### DETAILED DESCRIPTION

The illustrative embodiments recognize and take into account different considerations. For example, the illustrative embodiments recognize and take into account that it may be desirable to have a method and apparatus for organizing the content of multiple sources of information. Further, the illustrative embodiments recognize and take into account that it may be desirable to have a method and apparatus for visually presenting the content of these sources of information in a manner that enables a user to quickly and easily navigate through the content.

Thus, the illustrative embodiments provide a method and apparatus for visually representing information in a manner that enables a user to quickly and easily identify information related to a particular subject if interest. In one illustrative example, a plurality of vectors are created by a computer system for a plurality of media sources based on content in the plurality of media sources and a lexicon built for a selected subject. A visual representation of the content in the plurality of media sources is displayed, by the computer system, through a graphical user interface displayed on a display system based on the plurality of vectors. The visual representation of the content may facilitate a user navigating through the content. The visual representation of the content in the graphical user interface may be transformed, by the computer system, such that changes to the visual representation of the content in the graphical user interface visually track the user navigating through the content.

Referring now to the figures, in these illustrative examples, the same reference numeral may be used in more than one figure. The reuse of a particular reference numeral in different figures represents the same element in these different figures.

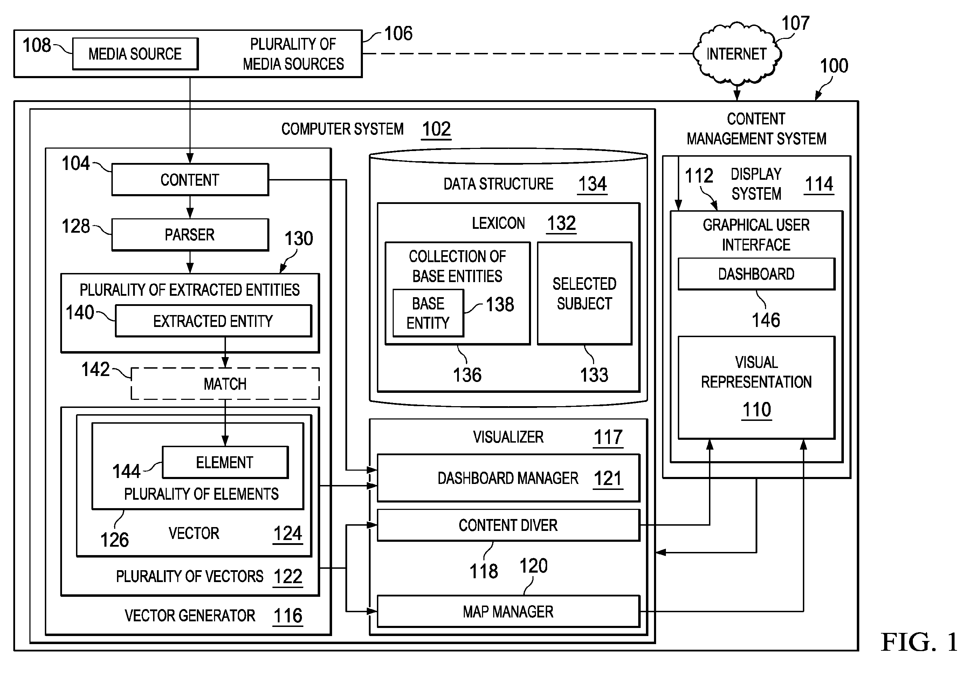

With reference to **Figure 1****,** an illustration of a content management system is depicted in the form of a block diagram in accordance with an illustrative embodiment. In one illustrative example, content management system **100** may be implemented using computer system **102.** Computer system **102** may comprise one computer or multiple computers that are in communication with each other.

Content management system **100** may be used to manage content **104** that may be obtained from plurality of media sources **106** and to allow a user to navigate through content **104.** In one illustrative example, each media source in plurality of media sources **106** is an electronic media source. In this manner, content management system **100** may also be referred to as an electronic media content navigation system.

Media source **108** may be an example of one of plurality of media sources **106.** Media source **108** may take different forms. In these illustrative examples, media source **108** may take the form of any written work in electronic form. For example, without limitation, media source **108** may take the form of an online news article, a digital report, a web-based news feed, a historical digital report, an online proprietary report, or some other type of electronic source of information. Depending on the implementation, content management system **100** may access or otherwise retrieve content **104** from plurality of media sources **106** through Internet **107** or some other type of communications network or computer network. Internet **107** refers to a system of interconnected computer networks.

As depicted, content management system **100** may be used to generate visual representation **110** of content **104.** Visual representation **110** may be displayed in graphical user interface **112** on display system **114.** Depending on the implementation, display system **114** may take the form of one or more display devices. A display module that is implemented in computer system **102** may be configured to display graphical user interface **112** on display system **114.**

In these illustrative examples, content management system **100** may include vector generator **116** and visualizer **117** that are coupled to each other. Visualizer **117** may include content diver **118,** map manager **120,** dashboard manager **121,** or a combination thereof.

Each of vector generator **116** and visualizer **117** may be implemented using software, hardware, firmware, or a combination thereof. Visualizer **117** may be coupled to the display module that is used to display graphical user interface **112.** In some illustrative examples, visualizer **117** and the display module may be implemented together in a same module that comprises hardware, software, firmware, or a combination thereof. Further, each of content diver **118,** map manager **120,** and dashboard manager **121** may be implemented using software, hardware, firmware, or a combination thereof.

When software is used, the operations performed by vector generator **116,** content diver **118,** map manager **120,** dashboard manager **121,** or a combination thereof may be implemented using, for example, without limitation, program code configured to run on a processor unit. When firmware is used, the operations may be implemented using, for example, without limitation, program code and data and stored in persistent memory to run on a processor unit.

When hardware is employed, the hardware may include one or more circuits that operate to perform the operations performed by vector generator **116,** content diver **118,** map manager **120,** dashboard manager **121,** or a combination thereof. Depending on the implementation, the hardware may take the form of a circuit system, an integrated circuit, an application specific integrated circuit (ASIC), a programmable logic device, or some other suitable type of hardware device configured to perform any number of operations.

A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device. In some illustrative examples, each of vector generator **116,** content diver **118,** map manager **120,** and dashboard manager **121** may be implemented in the same processor or a different processor.

In some cases, vector generator **116** may be referred to as a vector generator module that is implemented in computer system **102.** Visualizer **117** may also be referred to as a visualizer module that is implemented in computer system **102.** Further, content diver **118,** map manager **120,** and dashboard manager **121** may be referred to as a content diver module, a map manager module, and a dashboard manager module, respectively, all of which may be implemented in computer system **102.**

Vector generator **116** may receive content **104** from plurality of media sources **106** and generate plurality of vectors **122** for plurality of media sources **106.** Vector **124** may be an example of one of plurality of vectors **122** generated by vector generator **116.** In this illustrative example, vector **124** comprises plurality of elements **126.**

In one illustrative example, vector generator **116** accesses plurality of media sources **106** over a computer network, such as Internet **107.** For example, vector generator **116** may download plurality of media sources **106** from Internet **107** or retrieve a copy of each of plurality of media sources **106** over Internet **107.**

For example, vector generator **116** may include parser **128.** Parser **128** may be implemented using software, firmware, hardware, or a combination thereof. Parser **128** may also be referred to as a parser module that is implemented in computer system **102.**

In one illustrative example, parser **128** may access or retrieve content **104** in media source **108** and process content **104** to form plurality of extracted entities **130.** For example, parser **128** may be implemented using at least one of an unstructured text entity extractor, a named entity extractor, a named entity recognizer (NER), or some other type of information extractor to extract entities from content **104.**

As used herein, the phrase "at least one of," when used with a list of items, means different combinations of one or more of the listed items may be used and only one of the items in the list may be needed. The item may be a particular object, thing, step, operation, process, or category. In other words, "at least one of" means any combination of items or number of items may be used from the list, but not all of the items in the list may be required.

For example, without limitation, "at least one of item A, item B, or item C" or "at least one of item A, item B, and item C" may mean item A; item A and item B; item B; item A, item B, and item C; item B and item C; or item A and item C. In some cases, "at least one of item A, item B, or item C" or "at least one of item A, item B, and item C" may mean, but is not limited to, two of item A, one of item B, and ten of item C; four of item B and seven of item C; or some other suitable combination.

An entity, as used herein, may be a word, a phrase, or some other part or constituent of text that has meaning or relevance to selected subject **133.** For example, without limitation, an entity may be text that describes a thing, a person, a place, a name, a product, an organization, an industry, a service, an operation, an action, a state, an attribute, a property, a decision, or some other type of subject matter area. Depending on the implementation, selected subject **133** may take the form of, but is not limited to, a category of products, a particular product, an industry, a business entity, an organization, a service, a category of services, or some other type of subject matter.

Each extracted entity in plurality of extracted entities **130** is an entity that has been extracted from media source **108.** In one illustrative example, parser **128** may use at least one of a set of predefined criteria, a policy, a complex algorithm, an information extraction process, or some other suitable process to form plurality of extracted entities **130.**

In some cases, each entity in plurality of extracted entities **130** may be distinct. In these cases, when content **104** in media source **108** includes 20 instances of the entity "aviation," only one extracted entity for "aviation" may be generated. As another illustrative example, the phrase "maintenance and repair" may appear multiple times in content **104** of media source **108.** However, only one extracted entity for "maintenance and repair" may be generated.

Vector generator **116** uses plurality of extracted entities **130** and lexicon **132** to generate plurality of vectors **122.** Lexicon **132** may be built for selected subject **133** and stored in data structure **134.** Data structure **134** may take the form of a database, a spreadsheet, a table, a document, an associative memory, or some other type of data storage.

Lexicon **132** comprises collection of base entities **136** related to selected subject **133.** Base entity **138** may be an example of one base entity in collection of base entities **136.** In some illustrative examples, base entity **138** may be a root entity that represents a family of derivatives of a particular entity.

In one illustrative example, lexicon **132** is built by content management system **100** using at least one of user-specified factors, historical data, a predetermined ontology, a predefined listing of entities, or other suitable factors. In another illustrative example, lexicon **132** may be built using at least one of a query that is pared, a key word list that has been generated from a media source of interest, an index, a product list, or some other type of source.

Vector generator **116** processes content **104** in each media source in plurality of media sources **106** using lexicon **132.** For example, without limitation, vector generator **116** may compare each extracted entity in plurality of extracted entities **130** to collection of base entities **136.** In some illustrative examples, vector generator **116** may use at least one of an associative memory or a neural network to perform this comparison and to generate plurality of vectors **122.**

Extracted entity **140** is an example of one of plurality of extracted entities **130** created for media source **108.** Vector generator **116** compares extracted entity **140** to collection of base entities **136** to determine whether extracted entity **140** matches any of the base entities in collection of base entities **136.**

If vector generator **116** identifies match **142** between extracted entity **140** and, for example, base entity **138,** vector generator **116** determines whether a corresponding element for base entity **138** already exists in vector **124.** If a corresponding element does not already exist, element **144** is created and added to vector **124** for media source **108.** In this manner, element **144** corresponds to base entity **138.**

Element **144** may identify base entity **138.** For example, element **144** may take the form of base entity **138** itself. In this manner, plurality of elements **126** in vector **124** may also be referred to as a plurality of entities. In other illustrative examples, element **144** may take the form of some other type of textual or symbolic representation of base entity **138,** depending on the implementation.

Further, element **144** includes a weight value. This weight value may be used to represent or indicate the number of occurrences of recognition of base entity **138** within content **104** of media source **108.** In some cases, this weight value may be a normalized weight value. If vector generator **116** determines that a corresponding element for base entity **138** already exists in vector **124,** then a weight value for that corresponding element is updated to reflect the new occurrence.

Each of plurality of extracted entities **130** created for media source **108** may be similarly processed to generate vector **124** for media source **108.** Further, content **104** from each media source in plurality of media sources **106** may be similarly processed to form plurality of vectors **122** for plurality of media sources **106.**

In one illustrative example, content **104** may be obtained from plurality of media sources **106** continuously or periodically over time. As new media sources are accessed, new vectors are generated by vector generator **116.** In some cases, lexicon **132** may be modified over time.

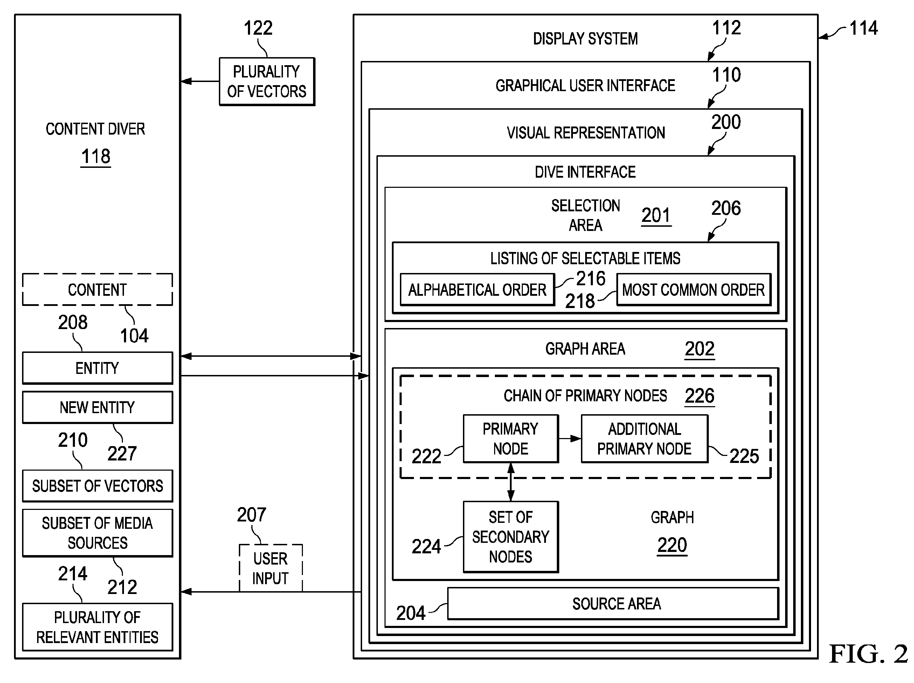

Visualizer **117** may use plurality of vectors **122** to visually represent content **104** in plurality of media sources **106** in graphical user interface **112.** In particular, content diver **118** and map manager **120** may visually represent content **104** in plurality of media sources **106** in graphical user interface **112** in a manner that facilitates easier and quicker navigation through content **104.** Content diver **118** and map manager **120** are described in greater detail further below in **Figures 2-3****.**

With reference still to **Figure 1****,** dashboard manager **121** may visually present at least a portion of content **104** in dashboard **146** in graphical user interface **112.** In one illustrative example, dashboard **146** takes the form of a graphical representation of a snapshot of content **104** in a portion of plurality of media sources **106** in graphical user interface **112.** Dashboard manager **121** may update this graphical presentation over time as new content is obtained from various media sources.

With reference now to **Figure 2****,** an illustration of content diver **118** and graphical user interface **112** from **Figure 1** is depicted in the form of a block diagram in accordance with an illustrative embodiment. In this illustrative example, content diver **118** may be used to visually represent content **104** in graphical user interface **112** in a manner that enables a user to easily and quickly navigate through content **104** to access information of interest.

As depicted, content diver **118** may display visual representation **110** in the form of dive interface **200** within graphical user interface **112.** Dive interface **200** may include selection area **201,** graph area **202,** and source area **204.**

In some illustrative examples, content diver **118** displays listing of selectable items **206** within selection area **201** prior to any user input being received through graphical user interface **112.** Listing of selectable items **206** may identify entities found in plurality of vectors **122** for plurality of media sources **106** in **Figure 1****.** In one illustrative example, listing of selectable items **206** may identify every distinct entity found in plurality of vectors **122.** In another illustrative example, listing of selectable items **206** includes every distinct entity that is found in more than some predetermined threshold number of vectors in plurality of vectors **122.**

In other illustrative examples, no listing may be displayed in selection area **201** until user input **207** has been received through graphical user interface **112.** In this manner, the initial creation of listing of selectable items **206** may be user-driven.

Content diver **118** may receive user input **207** through graphical user interface **112.** In one illustrative example, user input **207** may first identify entity **208,** which may be a base entity in this illustrative example. For example, without limitation, user input **207** may be text that can be recognized by content diver **118** as identifying entity **208.** Based on entity **208,** content diver **118** may transform dive interface **200.** For example, in response to a selection of entity **208** through user input **207,** content diver **118** may identify subset of vectors **210** within plurality of vectors **122** that includes entity **208.**

Subset of vectors **210** may directly correspond to subset of media sources **212** within plurality of media sources **106** in **Figure 1****.** In one illustrative example, content diver **118** displays a listing of the media sources in subset of media sources **212** within source area **204** in dive interface **200.** This listing may include, for example, without limitation, a date of publication, a title, a hyperlink, and other information for each media source in subset of media sources **212.**

Further, content diver **118** identifies plurality of relevant entities **214** that correspond to entity **208** with respect to subset of vectors **210.** A relevant entity, as used herein, is one that is related to another entity, which in this illustrative example, is entity **208.** A relevant entity in plurality of relevant entities **214** is an entity that is found in one or more vectors of subset of vectors **210.** Plurality of relevant entities **214** includes all of the entities in subset of vectors **210.** Content diver **118** may update listing of selectable items **206** in selection area **201** of dive interface **200** such that each selectable item in listing of selectable items **206** identifies a corresponding relevant entity in plurality of relevant entities **214.**

In some cases, diver interface **200** may provide a user with the option to sort listing of selectable items **206** in alphabetical order **216,** most common order **218,** or some other type of order. Most common order **218** may be a sorting in which, for example, the relevant entity that is most commonly found in subset of vectors **210** is listed at the top of listing of selectable items **206.**

Based on the selection of entity **208** through user input **207,** content diver **118** also displays graph **220** within graph area **202** of dive interface **200.** In particular, the creation of graph **220** is initiated by user input **207.** Graph **220** may include primary node **222** and set of secondary nodes **224** connected to primary node **222.** Graph **220** may be presented such that primary node **222** is visually distinguishable from set of secondary nodes **224.** For example, without limitation, primary node **222** may be in a different font color, background color, highlighted differently, or otherwise visually distinguished from set of secondary nodes **224.**

Primary node **222** may be a graphical representation of entity **208,** which was identified through user input **207.** Primary node **222** is thus initialized by user input **207.** Primary node **222** identifies both entity **208** and a quantity of vectors from plurality of vectors **122** included in subset of vectors **210.** Because each vector corresponds to a media source, the quantity identified by primary node **222** indicates to a user the number of media sources that include entity **208** or otherwise involve entity **208.**

Each secondary node in set of secondary nodes **224** may be a graphical representation of a relevant entity in plurality of relevant entities **214.** Each secondary node may identify the corresponding relevant entity and a quantity of vectors in subset of vectors **210** that include that corresponding relevant entity.

In one illustrative example, set of secondary nodes **224** may be displayed only for a selected portion of plurality of relevant entities **214.** For example, set of secondary nodes **224** may be used to visually represent the top three, five, six, or some other number of most commonly used relevant entities.

Graph **220** may be depicted in a manner that allows a user to quickly and easily grasp the number of media sources that involve different entities. Set of secondary nodes **224** provide an opportunity for the user to "dive" further into content **104.**

For example, the user may enter user input **207** that selects a secondary node of set of secondary nodes **224.** The selected secondary node may be transformed into additional primary node **225** that is visually distinguishable from the remaining secondary nodes in set of secondary nodes **224.** Together, primary node **222** and additional primary node **225** may form chain of primary nodes **226.**

The relevant entity identified in additional primary node **225** may then be treated as new entity **227** and processed in a manner similar to entity **208.** Based on new entity **227,** subset of vectors **210** may be narrowed to form a new subset of vectors that includes both entity **208** and new entity **227.** The listing of media sources displayed in source area **204** may also be updated based on the new subset of media sources corresponding to the new subset of vectors. Further, a new plurality of relevant entities may be identified for this new subset of vectors. Listing of selectable items **206** may then be updated based on this new plurality of relevant entities. Further, content diver **118** updates graph **220** by adding a new set of secondary nodes to graph **220** that are connected to additional primary node **225** based on the new plurality of relevant entities.

In this manner, graph **220** may be used to navigate through content **104** of plurality of media sources **106** in **Figure 1****.** Graph **220** may be updated based on user input **207** to create a longer chain of primary nodes **226** with numerous secondary nodes connected to each primary node in chain of primary nodes **226.**

Each time that a new primary node is added to chain of primary nodes **226,** the listing of media sources within source area **204** is updated. The number of media sources listed decreases with each new primary node added to chain of primary nodes **226.** In this manner, as chain of primary nodes **226** is created, a listing of hundreds to thousands of media sources may be filtered by user input **207** down to a more manageable, smaller set of media sources.

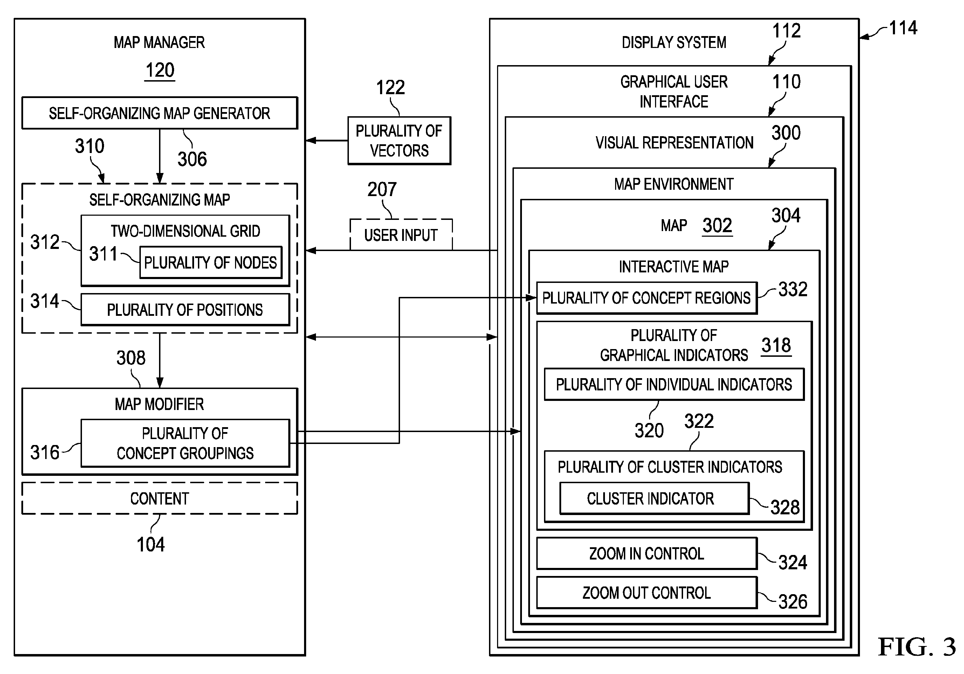

With reference now to **Figure 3****,** an illustration of map manager **120** and graphical user interface **112** from **Figure 1** is depicted in the form of a block diagram in accordance with an illustrative embodiment. In this illustrative example, map manager **120** displays visual representation **110** of content **104** from plurality of media sources **106** in **Figure 1** in graphical user interface **112** using map environment **300.**

As depicted, map environment **300** includes map **302.** In this illustrative example, map **302** may take the form of interactive map **304.** Interactive map **304** enables a user to enter user input **207** directly through interactive map **304.**

Map manager **120** may include self-organizing map generator **306** and map modifier **308.** Each of self-organizing map generator **306** and map modifier **308** may be implemented using software, firmware, hardware, or a combination thereof.

In one illustrative example, self-organizing map generator **306** may be implemented using an artificial neural network (ANN) that is trained through learning to produce a low-dimensional, discretized representation of an input space of the training samples. This representation may be referred to as self-.organizing map **310.**

Self-organizing map generator **306** uses plurality of vectors **122** created by vector generator **116** in **Figure 1** to form self-organizing map **310.** In one illustrative example, each node in plurality of nodes **311** represents a corresponding vector in plurality of vectors **122,** and thereby, a corresponding media source in plurality of media sources **106** in **Figure 1****.**

In this illustrative example, self-organizing map **310** may include plurality of nodes **311** that are positioned on self-organizing map **310** with respect to two-dimensional grid **312.** In other words, plurality of nodes **311** may have plurality of positions **314** within self-organizing map **310.** In some cases, plurality of nodes **311** may also be referred to as a plurality of map points or a plurality of cells.

Each node in plurality of nodes **311** may be associated with a weight value and a position in two-dimensional space. Depending on the implementation, plurality of nodes **311** may include hundreds of nodes, thousands of nodes, tens of thousands of nodes, hundreds of thousands of nodes, millions of nodes, or some other number of nodes.

Plurality of positions **314** for plurality of nodes **311** may be generated such that nodes representing media sources that are more closely related to each other are positioned closer together within map **302.** Further, nodes representing media sources that are less related to each other are positioned farther apart in map **302.**

Map modifier **308** modifies self-organizing map **310** to create map **302** that is visually presented in map environment **300** in graphical user interface **112.** In particular, map modifier **308** groups plurality of nodes **311** to form plurality of concept groupings **316** that are then visually presented in graphical user interface **112.** For example, map modifier **308** may use one or more recursive algorithms to evaluate and group plurality of nodes **311.**

Each concept grouping in plurality of concept groupings **316** may represent a grouping of nodes, and thereby, a grouping of media sources that are about, related to, or otherwise relevant to a particular concept. In this manner, plurality of concept groupings **316** may be referred to as a plurality of groupings of media sources. A concept grouping may include one or more nodes.

Each node of plurality of nodes **311** of self-organizing map **310** may include a weight value and a position. In one illustrative example, for each selected node, map modifier **308** evaluates each adjacent node around the selected node to determine whether the adjacent node may be grouped with the selected node with respect to a particular concept. This evaluation may be based on the weight value of the selected node and the weight value of the adjacent node. In some illustrative examples, the evaluation may be based on the two vectors corresponding to these two nodes. If the two vectors share a percentage of entities above some selected threshold, such as greater than about 40 percent or about 50 percent, then the two nodes are grouped.

For each adjacent node that is grouped with the selected node, that adjacent node is treated as the new selected node. The new adjacent nodes for the new selected node are then evaluated. In this manner, plurality of nodes **311** may be grouped to form plurality of concept groupings **316.**

In one illustrative example, map manager **120** visually presents plurality of concept groupings **316** in map **302** by displaying graphical boundary lines in graphical user interface **112** that define plurality of concept groupings **316.** Each bounded region of map **302 is** a concept region that represents a concept grouping that includes one or more nodes of plurality of nodes **311.** In this manner, map **302** may include plurality of concept regions **332** that represent plurality of concept groupings **316.**

Further, map manager **120** displays plurality of graphical indicators **318** on map **302** in graphical user interface **112** to represent plurality of nodes **311.** Plurality of graphical indicators **318** may include plurality of individual indicators **320** and plurality of cluster indicators **322.** Each individual indicator in plurality of individual indicators **320** may represent a single node, and thereby, a single media source.

Each cluster indicator in plurality of cluster indicators **322** may represent a cluster of nodes, and thereby, a cluster of media sources. The clustering of nodes in map **302** may depend on the zoom level of map **302** that is displayed in graphical user interface **112.**

For example, without limitation, graphical user interface **112** enables a user to zoom into map **302** to more clearly distinguish these graphical indicators. As one illustrative example, user input **207** may be entered through graphical user interface **112** to select zoom in control **324** or zoom out control **326.** Zoom in control **324** and zoom out control **326** may be graphical control features.

In this illustrative example, a user-selection of zoom in control **324** may cause zooming into map **302** based on this zoom input within graphical user interface. In particular, map **302** may be zoomed into from a current zoom level to a new zoom level based on a zoom input received through zoom in control **324.** Plurality of graphical indicators **318** displayed on map **302** may be updated based on the new zoom level. For example, one or more cluster indicators may be exploded out into multiple individual indicators, smaller cluster indicators, or both. Zooming in may allow a user to more clearly distinguish the various graphical indicators displayed in map **302.**

Conversely, map **302** may be zoomed out from a current zoom level to a new zoom level based on a zoom input received through zoom out control **326.** Plurality of graphical indicators **318** displayed on map **302** may be updated based on the new zoom level. For example, one or more cluster indicators may be created from multiple individual indicators, smaller cluster indicators, or both. Zooming out may allow a user to view more concept regions.

In one illustrative example, cluster indicator **328** may be used to visually represent multiple individual indicators that have been clustered based on the zoom level. The size, shape, color, or some other visual property of cluster indicator **328** may indicate the number of individual indicators represented by cluster indicator **328,** and thereby, the number of media sources represented by cluster indicator **328.** As one illustrative example, as the size of cluster indicator **328** increases, the number of media sources represented by cluster indicator **328** increases.

As one illustrative example, user input **207** may be received that selects cluster indicator **328.** A selection of cluster indicator **328** may cause cluster indicator **328** to be exploded out and transformed into multiple individual indicators that represent multiple media sources. A user may be able to select an individual indicator to learn more information about the media source represented by that individual indicator.

In this manner, map **302** enables a user to navigate through content **104** quickly and easily by zooming into and zooming out of map **302.** A user may zoom into a particular concept region of plurality of concept regions **332** in map **302** to find media sources that are about, related to, or otherwise relative to the concept corresponding to that concept region. Further, a user may use the various graphical indicators displayed on map **302** to navigate through content **104** of plurality of media sources **106** in **Figure 1****.**

The illustrations of content management system **100** in **Figure 1****,** graphical user interface **112** in **Figures 1-3****,** content diver **118** in **Figures 1-2****,** and map manager **120** in **Figures 1** and **3** are not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

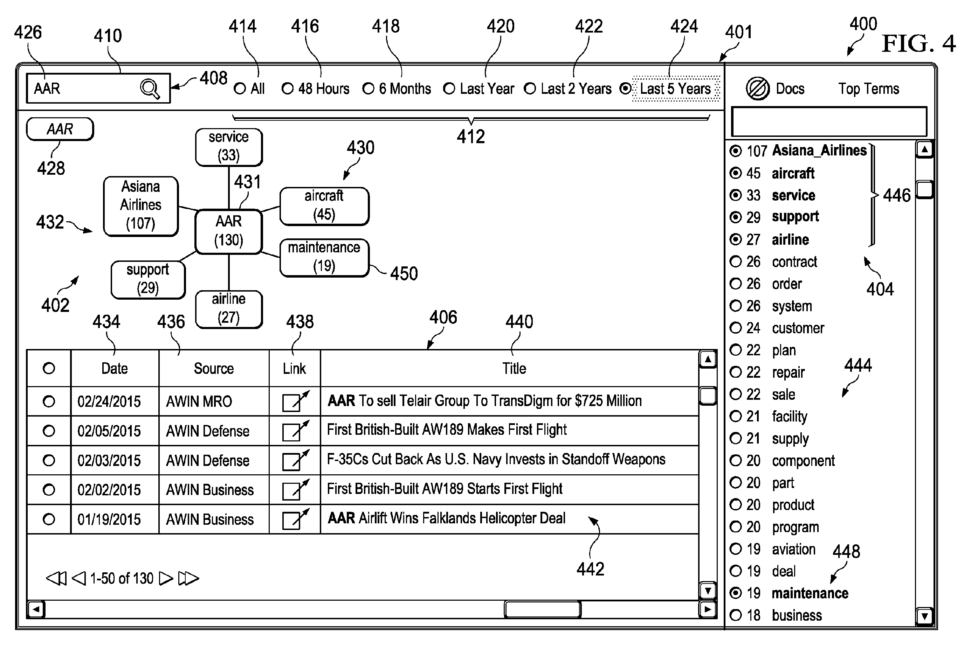

With reference now to **Figure 4****,** an illustration of a dive interface within a graphical user interface is depicted in accordance with an illustrative embodiment. In this illustrative example, graphical user interface **400** may be an example of one implementation for graphical user interface **112** in **Figure 1****.** Dive interface **401** is displayed within graphical user interface **400.** Dive interface **401** may be an example of one implementation for dive interface **200** in **Figure 2****.**

As depicted, graphical user interface **400** includes graph area **402,** selection area **404,** source area **406,** and input area **408.** Graph area **402,** selection area **404,** and source area **406** may be examples of implementations for graph area **202,** selection area **201,** and source area **204,** respectively, in **Figure 1****.**

In this illustrative example, a user may enter different types of user input in input area **408.** Input area **408** includes entity entry box **410** and plurality of time selectors **412.** Plurality of time selectors **412** include control buttons that enable a user to select the time period within which the content from various media sources is to be pulled. In this illustrative example, plurality of time selectors **412** include all button **414,** 48 hours button **416,** 6 months button **418,** last year button **420,** last 2 years button **422,** and last 5 years **424** button. As depicted, last 5 years button **424** has been selected.

Entity **426** has been entered in entity entry box **410.** In response to entity **426** being entered in entity entry box **410,** entity identifier **428** has been added to graph area **402.** Further, in response to entity **426** being entered in entity entry box **410,** graph **430** is displayed in graph area **402.** Graph **430** may be an example of one implementation for graph **220** in **Figure 2****.**

Graph **430** includes primary node **431** and set of secondary nodes **432** connected to primary node **431.** Primary node **431** is visually distinguished from set of secondary nodes **432** in graphical user interface **400.**

Primary node **431** identifies entity **426** and a quantity of a subset of vectors that include entity **426.** This quantity of a subset of vectors may correspond directly to the quantity of media sources that have been associated with entity **426** by a vector generator, such as vector generator **116** in **Figure 1****.** At least a portion of these media sources may be identified within source area **406** in graphical user interface **400.**

Each secondary node in set of secondary nodes **432** in graph **430** identifies a relevant entity corresponding to entity **426.** Further, each secondary node identifies a quantity of vectors that include that relevant entity within the subset of vectors that includes entity **426.**

Source area **406** includes date column **434,** source column **436,** link column **438,** and title column **440,** which form listing of media sources **442** through which a user may scroll. In this illustrative example, each media source included in listing of media sources **442** is an electronic media source that is available and accessible through the Internet.

In this illustrative example, date column **434** identifies the date on which each media source was published. Source column **436** identifies the publisher, business, organization, or entity that provides each media source. Link column **438** provides a hyperlink for accessing each media source. Title column **440** identifies the title of each media source. A user may sort listing of media sources **442** by date, source, or title by selecting date column **434,** source column **436,** or title column **440,** respectively.

In response to entity **426** being entered in entity entry box **410,** listing of selectable items **444** is displayed in selection area **404.** Listing of selectable items **444** may be an example of one implementation for listing of selectable items **206** in **Figure 2****.** Listing of selectable items **444** identifies all relevant entities identified as corresponding to entity **426.** These relevant entities are the other entities that are found in each vector that includes entity **426.**

In this illustrative example, set of selectable items **446** have been selected. Set of secondary nodes **432** displayed in graph **430** correspond to set of selectable items **446.** In other words, each secondary node in set of secondary nodes **432** is another visual representation of the relevant entity identified by a corresponding selectable item in selection area **404.**

Each selectable item in listing of selectable items **444** includes an identification of the corresponding relevant entity and a quantity of vectors that include that corresponding relevant entity. For example, selectable item **448** identifies the relevant entity "maintenance" and a quantity of 19 vectors. Thus, "maintenance" appears in 19 of the media sources that also include entity **426.**

The selection of selectable item **448** causes secondary node **450** to be added to graph **430.** Secondary node **450** corresponds to selectable item **448,** and thereby, to the relevant entity identified by selectable item **448.** Similarly, a selection of some other selectable item in listing of selectable items **444** may cause a corresponding secondary node to be added to graph **430.** Further, a deselection of a selectable item in listing of selectable items **444** may cause the corresponding secondary node in graph **430** to be removed from graph area **402.**

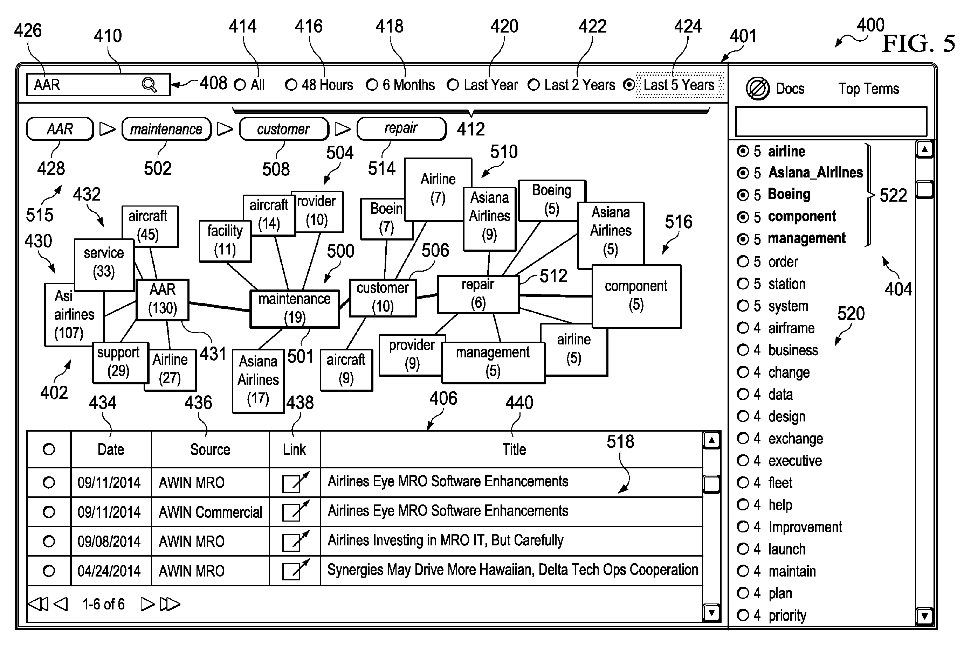

With reference now to **Figure 5****,** an illustration of dive interface **401** within graphical user interface **400** from **Figure 4** is depicted in accordance with an illustrative embodiment. In this illustrative example, graph **430** has been updated to form chain of primary nodes **500.** Chain of primary nodes **500** may be an example of one implementation for chain of primary nodes **226** in **Figure 2****.**

As depicted, primary node **501** is connected to primary node **431.** Primary node **501** was previously secondary node **431** in **Figure 4****.** A selection of secondary node **450** in **Figure 4** by user input transforms secondary node **450** in **Figure 4** into primary node **501** in **Figure 5****.** Further, the selection of secondary node **450** in **Figure 4** that forms a new primary node **501** in graph **430** also causes entity identifier **502** to be added to graph area **402** near entity identifier **428.** Still further, set of secondary nodes **504** is added to graph **430.** Each of set of secondary nodes **504** is connected to primary node **501.**

User input selecting one of set of secondary nodes **504** transforms this secondary node into primary node **506.** Entity identifier **508** is added to graph area **402** near entity identifier **502.** Further, set of secondary nodes **510** is added to graph **430** with each of set of secondary nodes **510** connected to primary node **506.**

User input selecting one of set of secondary nodes **510** transforms this secondary node into primary node **512.** Entity identifier **514** is added to graph area **402** near entity identifier **508.** Further, set of secondary nodes **516** is added to graph **430** with each of set of secondary nodes **516** connected to primary node **512.**

In this manner, primary node **431,** primary node **501,** primary node **506,** and primary node **512** form chain of primary nodes **500.** Each of these primary nodes is displayed such that the primary nodes are easily and readily visually distinguishable from the secondary nodes in graph **430.** Entity identifier **428,** entity identifier **502,** entity identifier **508,** and entity identifier **514** form chain of identifiers **515,** which corresponds to chain of primary nodes **500.** Chain of identifiers **515** provides a user with a way to quickly and easily track navigation through the content visually represented within dive interface **401.**

As depicted, primary node **512** identifies that only six vectors, and thereby, six media sources include all of the entities identified by the various primary nodes in chain of primary nodes **500.** Six media sources may be a more manageable group than the 130 media sources that included just the entity "AAR" as identified by primary node **431.**

Each new user-based selection of an entity that results in a new primary node being added to graph **430** also results in an updating of the media sources listed in source area **406.** Updated listing of media sources **518** reflects the final six media sources that include all of the entities identified by chain of primary nodes **500.**

Each new user-based selection of an entity that results in a new primary node being added to graph **430** also results in an updating of listing of selectable items **444** from **Figure 4****.** Updated listing of selectable items **520** reflects the relevant entities based on the final six media sources that include all of the entities identified by chain of primary nodes **500.**

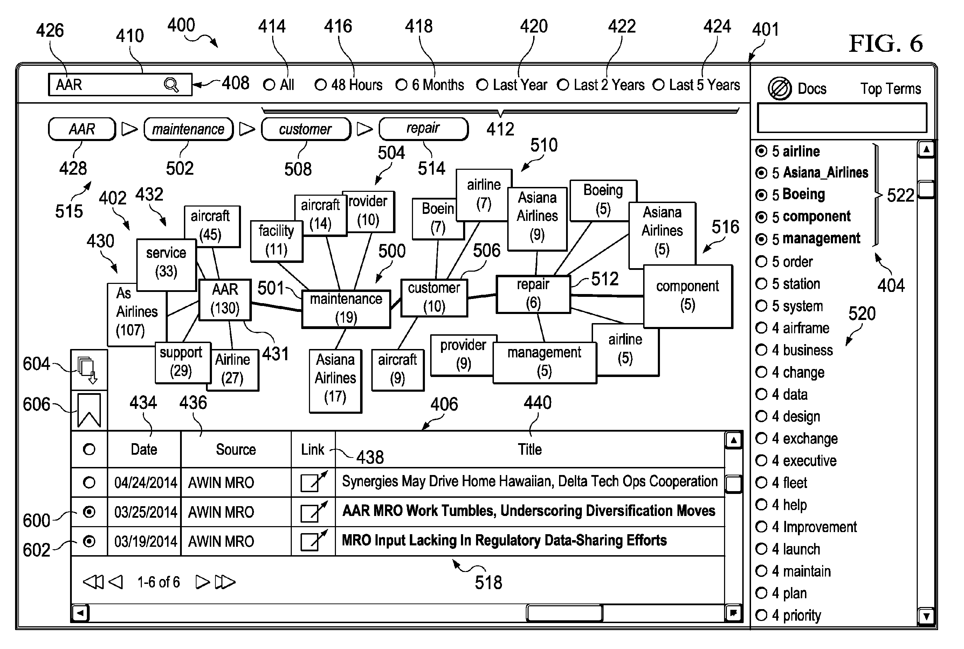

With reference now to **Figure 6****,** an illustration of dive interface **401** within graphical user interface **400** from **Figure 4** is depicted in accordance with an illustrative embodiment. In this illustrative example, a user has entered user input selecting media source **600** and media source **602** within updated listing of media sources **518** in source area **406.**

In response to these selections, download icon **604** and tag icon **606** are displayed in graphical user interface **400.** A selection of download icon **604** may enable a user to download or otherwise retrieve the actual content from the selected media sources. A selection of tag icon **606** may enable a user to share the hyperlink for and other information about the selected media sources with one or more other users.

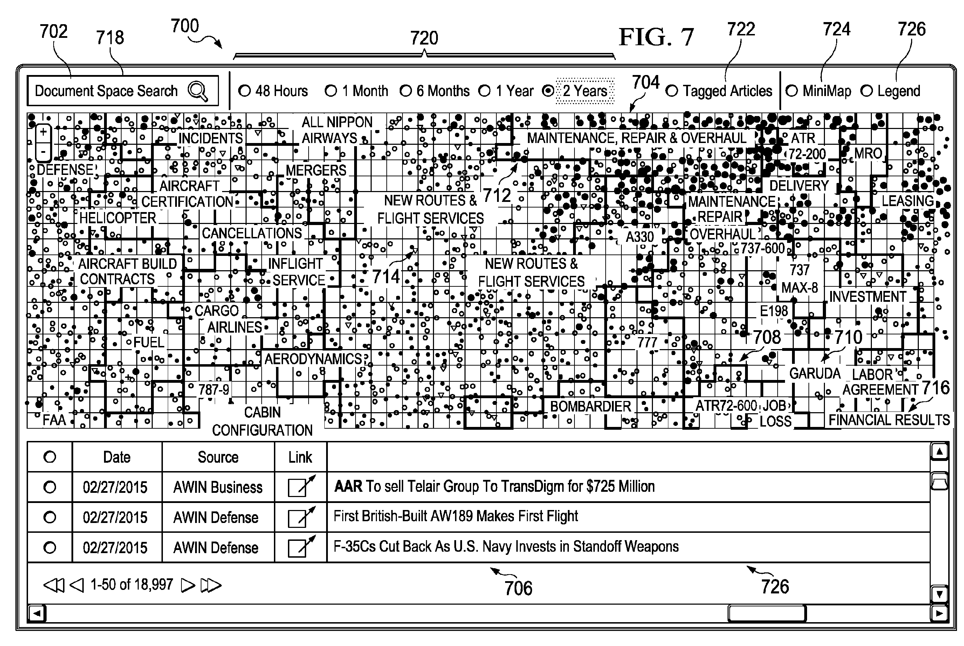

With reference now to **Figure 7****,** an illustration of a map environment within a graphical user interface is depicted in accordance with an illustrative embodiment. In this illustrative example, graphical user interface **700** is an example of one implementation for graphical user interface **112** in **Figures 1** and **3****.**

As depicted, graphical user interface **700** includes input area **702,** map area **704,** and source area **706.** User input may be entered through input area **702.** Map area **704** is used for displaying map environment **708.** In particular, map **710** is displayed within map environment **708.** Map environment **708** and map **710** are examples of implementations for map environment **300** and map **302,** respectively, in **Figure 3****.**

In this illustrative example, plurality of cluster indicators **712** and plurality of individual indicators **714** are displayed on map **710.** Plurality of cluster indicators **712** and plurality of individual indicators **714** may be examples of implementations for plurality of cluster indicators **322** and plurality of individual indicators **320,** respectively, in **Figure 3****.**

Map **710** includes plurality of concept regions **715,** which may be an example of one implementation for plurality of concept regions **332** in **Figure 3****.** Each concept region of plurality of concept regions **715** is a region of map **710** defined by boundary lines. Each concept region represents a concept grouping and corresponds to a particular concept.

Plurality of concept labels **716** are overlaid on plurality of concept regions **715** in map **710.** Plurality of concept labels **716** identify the concepts that correspond to plurality of concept regions **715.** Thus, the portion of plurality of individual indicators **714** and the portion of plurality of cluster indicators **712** that are located within or on the boundary lines of a particular concept region represent media sources that are related to the corresponding concept.

Input area **702** includes concept entry box **718** and time selectors **720.** Further, input area **702** includes tagged article selector **722,** minimap selector **724,** and legend selector **726.**

Concept entry box **718** enables a user to enter a concept. An entry of a concept may cause map **710** to be zoomed in towards the particular concept region within map **710** corresponding to that concept. Time selectors **720** enable a user to select the time period for media sources to be visually represented within map **710.**

A selection of tagged article selector **722** causes only those media sources that have been previously tagged to be displayed in map **710.** A tagged article may be a media source that has been shared with another user. A selection of minimap selector **724** causes a miniature zoomed out view of map **710** to be displayed in graphical user interface **700.** A selection of legend selector **726** causes a legend to be displayed in graphical user interface **700** for use in interpreting the graphical indicators displayed on map **710.**

Listing of media sources **728** in source area **706** provides the user with a more detailed view of the individual media sources visually represented within map **710.** The user may scroll through the listing of media sources **728** and select any media source of interest within this listing of media sources **728** to tag that media source, download that media source, or perform some other operation related to that media source.

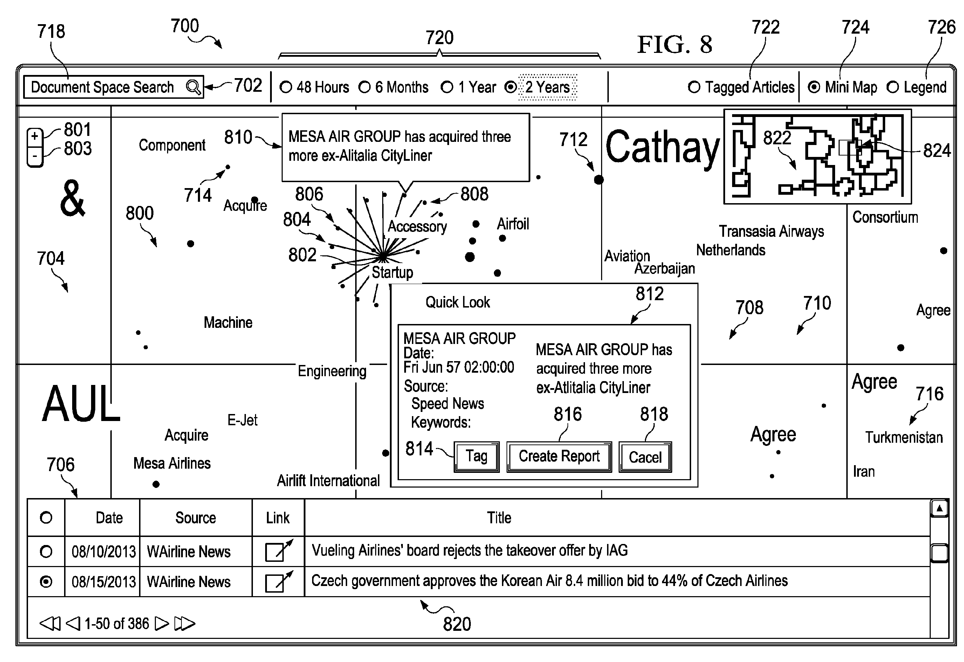

With reference now to **Figure 8****,** an illustration of a zoomed in view of map **710** from **Figure 7** is depicted in accordance with an illustrative embodiment. In this illustrative example, zoomed in view **800** of map **710** is displayed in graphical user interface **700.** A user may use zoom in control **801** to provide zoom in input for zooming into map **710.** A user may use zoom out control **703** to provide zoom out input for zooming out of map **710.**

In this illustrative example, cluster indicator **802** has been selected through user input. Consequently, cluster indicator **802** has been exploded out such that the visual representation of the cluster of media sources represented by cluster indicator **802** is transformed into a visual representation of the individual media sources within that cluster. In particular, cluster indicator **802** has been exploded into group of individual indicators **804.** In this illustrative example, group of individual indicators **804** are shown connected to cluster indicator **802** and displayed according to spiral pattern **806.**

Individual indicator **808** belongs to group of individual indicators **804.** A selection of individual indicator **808** through user input causes information feature **810** to be displayed in graphical user interface **700.** Information feature **810** identifies information about the media source represented by individual indicator **808.**

A selection of information feature **810** causes option box **812** to be displayed. Option box **812** also identifies information about the media source represented by individual indicator **808.** Further, option box **812** includes tag button **814,** report button **816,** and cancel button **818.** Selecting tag button **814** enables sharing of the media source represented by individual indicator **808** with another user. Selecting report button **816** causes a report to be generated with the information about the media source represented by individual indicator **808.** Selecting cancel button **818** may remove option box **812** from graphical user interface **700.**

In this illustrative example, updated listing of media sources **820** in source area **706** includes a list of all media sources represented by the indicators displayed in zoomed in view **800** of map **710.** Updated listing of media source **820** includes significantly fewer media sources than listing of media sources **728** in **Figure 7****.**

In this illustrative example, minimap **822** is displayed in graphical user interface **700.** Minimap **822** is a miniature zoomed out view of the entirety of map **710.** Area **824** in minimap **822** indicates the portion of map **710** that is currently displayed in graphical user interface **700** based on the current zoom level.

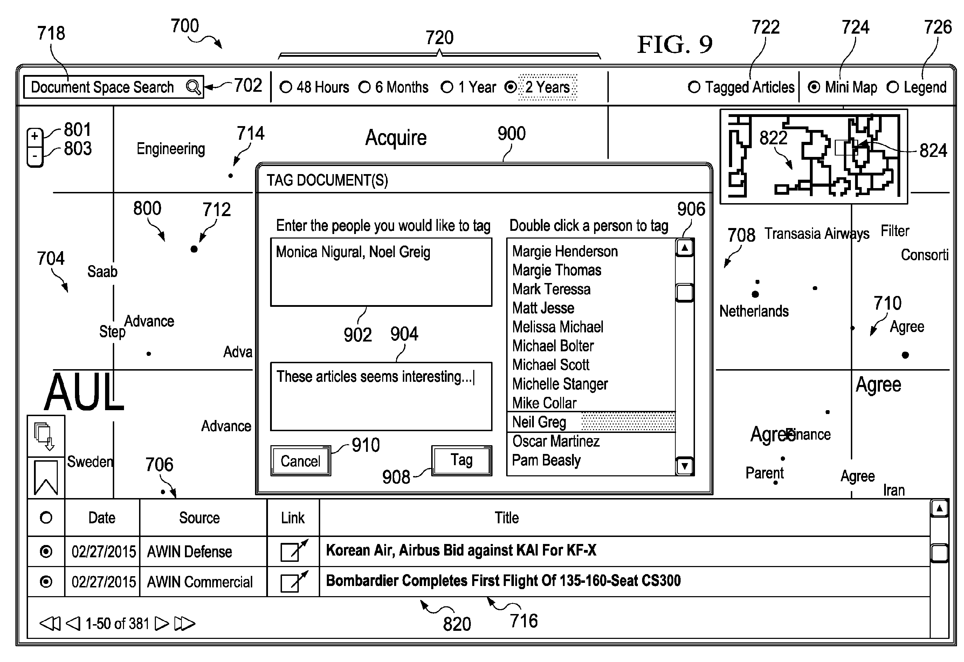

With reference now to **Figure 9****,** an illustration of a tag window displayed in graphical user interface **700** from **Figure 8** is depicted in accordance with an illustrative embodiment. In this illustrative example, tag window **900** may be displayed in graphical user interface **700** from **Figure 8** when tag button **814** in **Figure 8** is selected.

As depicted, tag window **900** includes people entry box **902,** notes entry box **904,** people option box **906,** tag button **908,** and cancel button **910.** People entry box **902** enables a user to directly enter the names or identifiers of users with whom the media source is to be shared. In this illustrative example, tagging a person may cause the digital document of the media source or a hyperlink for the media source to be emailed to that person.

Notes entry box **904** enables a user to enter notes or comments to be included with the email. People option box **906** enables a user to select from a predefined listing of users.

A selection of tag button **908** causes the media source to be shared with any person that has been identified in people entry box **902** and any person that has been selected through people option box **906.** A selection of cancel button **910** closes tag window **900.**

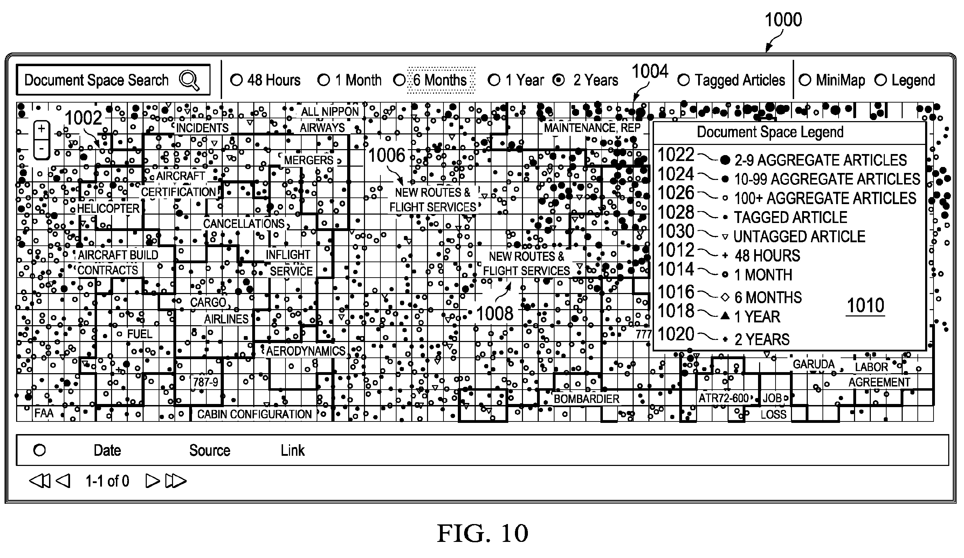

With reference now to **Figure 10****,** an illustration of a map environment in a graphical user interface is depicted in accordance with an illustrative embodiment. In this illustrative example, graphical user interface **1000** is another example of one implementation for graphical user interface **112** described in **Figure 3****.**

In this illustrative example, map environment **1002** in graphical user interface **1000** includes map **1004.** Plurality of graphical indicators **1006** and plurality of concept labels **1008** are displayed on map **1004.**
In this illustrative example, legend **1010** is also displayed in graphical user interface **1000.** Legend **1010** identifies first time type **1012,** second time type **1014,** third time type **1016,** fourth time type **1018,** and fifth time type **1020.**

First time type **1012,** second time type **1014,** third time type **1016,** fourth time type **1018,** and fifth time type **1020** correspond to times periods of 48 hours, 1 month, 6 months, 1 year, and 2 years, respectively. A graphical indicator having a time type selected from one of first time type **1012,** second time type **1014,** third time type **1016,** fourth time type **1018,** or fifth time type **1020** means that the media source or media sources represented by that graphical indicator was published or made publicly available within the corresponding time period.

Legend **1010** also identifies first quantity type **1022,** second quantity type **1024,** and third quantity type **1026** for describing cluster indicators. Each of these quantity types corresponds with a different number of media sources. For example, a cluster indicator of first quantity type **1022,** second quantity type **1024,** or third quantity **1026** represents a cluster of nodes, and thereby, a cluster of media sources that includes 2 to 9 media sources, 10 to 99 media sources, or 100 or more media sources, respectively.

Legend **1010** also identifies tagged type **1028** and untagged type **1030.** A graphical indicator of tagged type **1028** indicates that the corresponding media source was tagged. A graphical indicator of untagged type **1030** indicates that the corresponding media source has never been tagged.

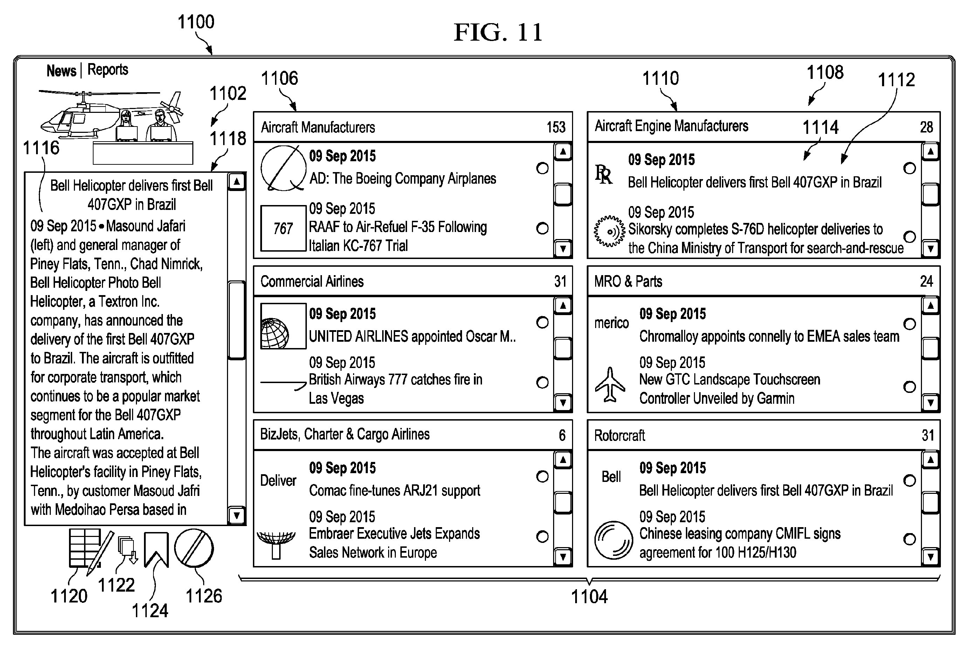

With reference now to **Figure 11****,** an illustration of a dashboard is depicted in accordance with an illustrative embodiment. In this illustrative example, dashboard **1100** is an example of one implementation for dashboard **146** in **Figure 1****.**

Dashboard **1100** includes featured area **1102** and topic area **1104.** In this illustrative example, plurality of topic boxes **1106** are displayed within topic area **1104.** A dashboard manager, such as dashboard manager **121** in **Figure 1****,** pushes highlights corresponding to media sources related to a topic corresponding to a particular topic box for display within that topic box.

As one illustrative example, topic box **1108** includes topic information **1110** and plurality of highlights **1112.** Topic information **1110** identifies the corresponding topic and the number of media sources having highlights included within topic box **1108.**

Each highlight in plurality of highlights **1112** may be a notification, a snapshot, a status update, or some other type of information related to a corresponding media source. Highlight **1114** is an example of one of plurality of highlights **1112.** A selection of highlight **1114** by user input causes the corresponding media source to be displayed within featured area **1102.** As depicted, content **1116** for media source **1118** is displayed within featured area **1102.**

Dashboard **1100** also includes customization button **1120,** report button **1122,** tag button **1124,** and close button **1126.** Selecting customization button **1120** allows a user to customize dashboard **1100.** Selecting report button **1122** allows a user to generate a report that includes content **1116.** Selecting tag button **1124** allows a user to share media source **1118** with another user. Selecting close button **1126** allows a user to remove the display of media source **1118** from featured area **1102** or to remove featured area **1102** from dashboard **1100.**

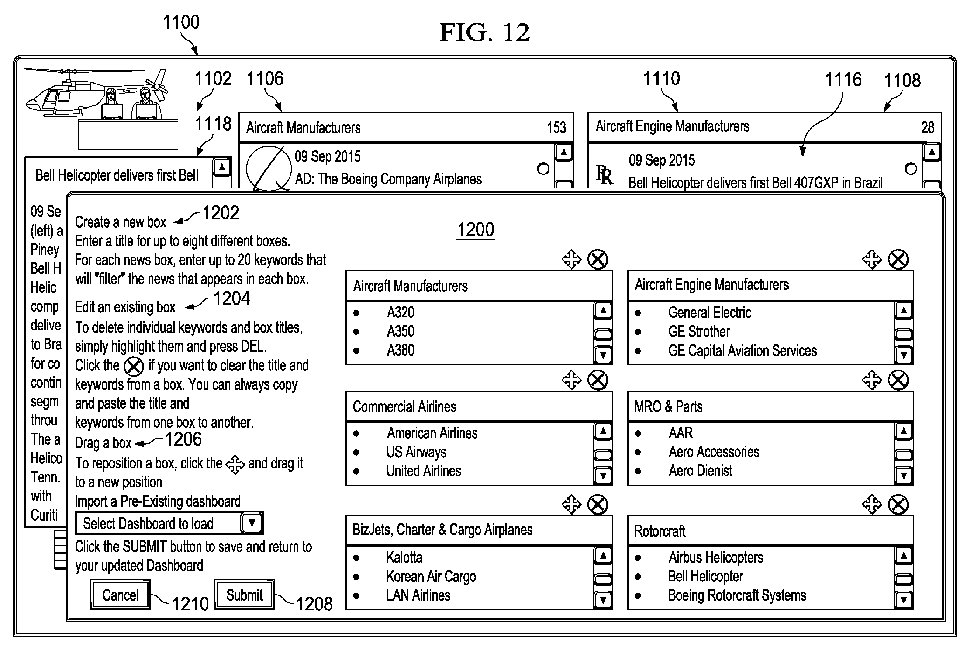

With reference now to **Figure 12****,** an illustration of a customization window displayed over a dashboard is depicted in accordance with an illustrative embodiment. In this illustrative example, a selection of customization button **1120** in **Figure 11** has caused customization window **1200** to be displayed over dashboard **1100** from **Figure 11****.**

Customization window **1200** includes new topic box section **1202,** edit topic box section **1204,** positioning section **1206,** submit button **1208,** and cancel button **1210.** New topic box section **1202** instructs a user on how to add a new topic box to topic area **1104** in dashboard **1100** in **Figure 11****.** Edit topic box section **1204** instructs a user on how to edit an existing topic box in topic area **1104** in dashboard **1100.** Further, positioning section **1206** instructs a user on how to reposition the topic boxes within topic area **1104** of dashboard **1100.**

Selecting submit button **1208** causes any customization changes made to be applied. Selecting cancel button **1210** closes customization window **1200** without saving any changes.

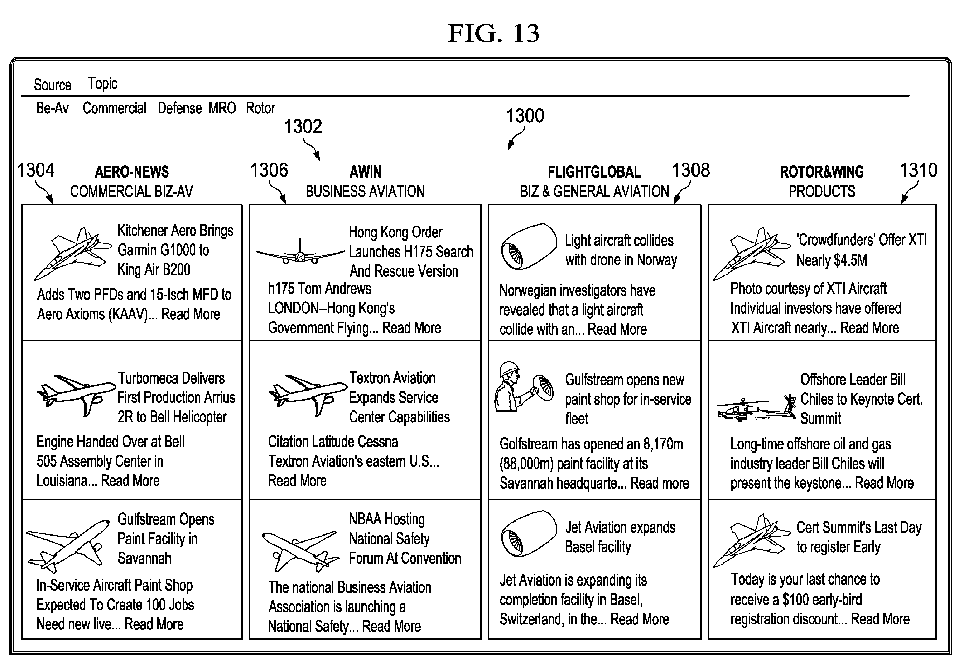

With reference now to **Figure 13****,** an illustration of a dashboard is depicted in accordance with an illustrative embodiment. In this illustrative example, dashboard **1300** is another example of one implementation for dashboard **146** in **Figure 1****.**

In this illustrative example, dashboard **1300** includes plurality of topic sections **1302.** Plurality of topic sections **1302** include topic section **1304,** topic section **1306,** topic section **1308,** and topic section **1310.** Each of these topic sections may display highlights for media sources that are relevant to the topics identified by these topic sections.

The illustrations of graphical user interfaces in **Figures 4-13** are not meant to imply physical or architectural limitations to the manner in which an illustrative embodiment may be implemented. Other elements in addition to or in place of the ones illustrated may be used. Some elements may be optional.

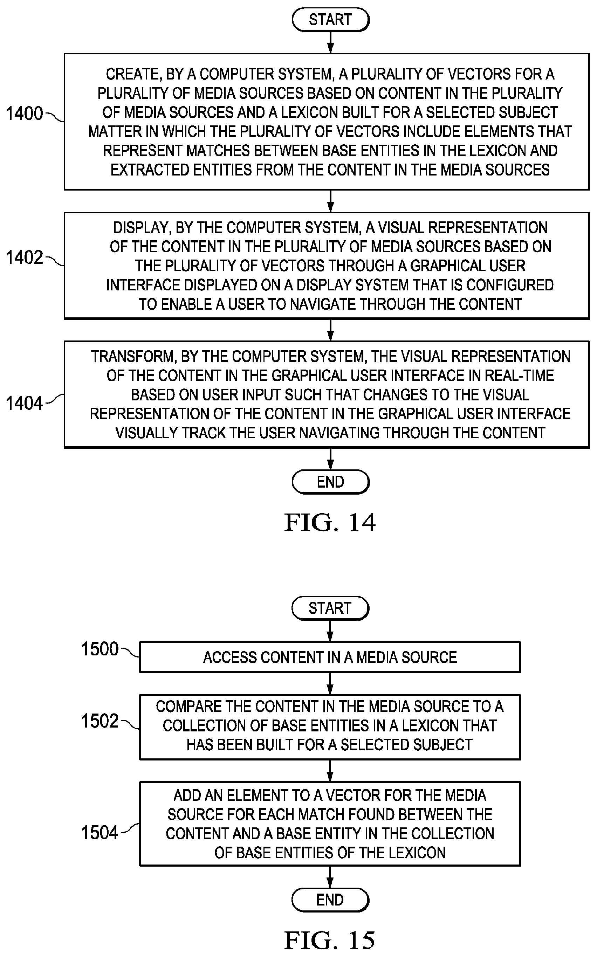

With reference now to **Figure 14****,** an illustration of a process for visually representing information is depicted in the form of a flowchart in accordance with an illustrative embodiment. The process illustrated in **Figure 14** may be implemented using content management system **100** in **Figure 1****.** In one illustrative example, the process illustrated in **Figure 14** may be implemented using vector generator **116** from **Figure 1** and content diver **118,** map manager **120,** or both from **Figure 1****.**

The process begins by creating, by a computer system, a plurality of vectors for a plurality of media sources based on content in the plurality of media sources and a lexicon built for a selected subject matter in which the plurality of vectors include elements that represent matches between base entities in the lexicon and extracted entities from the content in the media sources (operation **1400**). In operation **1400,** the lexicon may include a collection of base entities. Next, the computer system displays a visual representation of the content in the plurality of media sources based on the plurality of vectors through a graphical user interface displayed on a display system that is configured to enable a user to navigate through the content (operation **1402**).

Thereafter, the computer system may transform the visual representation of the content in the graphical user interface in real-time based on user input such that changes to the visual representation of the content in the graphical user interface visually track the user navigating through the content (operation **1404**), with the process terminating thereafter. In operation **1404,** this transformation may be performed in a manner that allows a user to further navigate through the content quickly and easily. Transforming the visual representation in real-time may mean transforming the visual representation without significant delay or without an observable delay from the time the user input is received through the graphical user interface.

With reference now to **Figure 15****,** an illustration of a process for creating a vector for a media source is depicted in the form of a flowchart in accordance with an illustrative embodiment. The process illustrated in **Figure 15** may be implemented using vector generator **116** from **Figure 1****.** Further, this process may be used to implement operation **1400** in **Figure 14****.**

The process may begin by accessing content in a media source (operation **1500**). Next, the content in the media source is compared to a collection of base entities in a lexicon that has been built for a selected subject (operation **1502**).

Operation **1502** may be performed by, for example, without limitation, parsing the content in the media source to form a plurality of extracted entities. Each extracted entity in the plurality of extracted entities may be compared to the collection of base entities to determine whether a match is present between that extracted entity and any base entity in the collection of base entities.

An element is added to a vector for the media source for each match found between the content and a base entity in the collection of base entities of the lexicon (operation **1504**), with the process terminating thereafter. The process described in **Figure 15** may be repeated for each media source in a plurality of media sources.

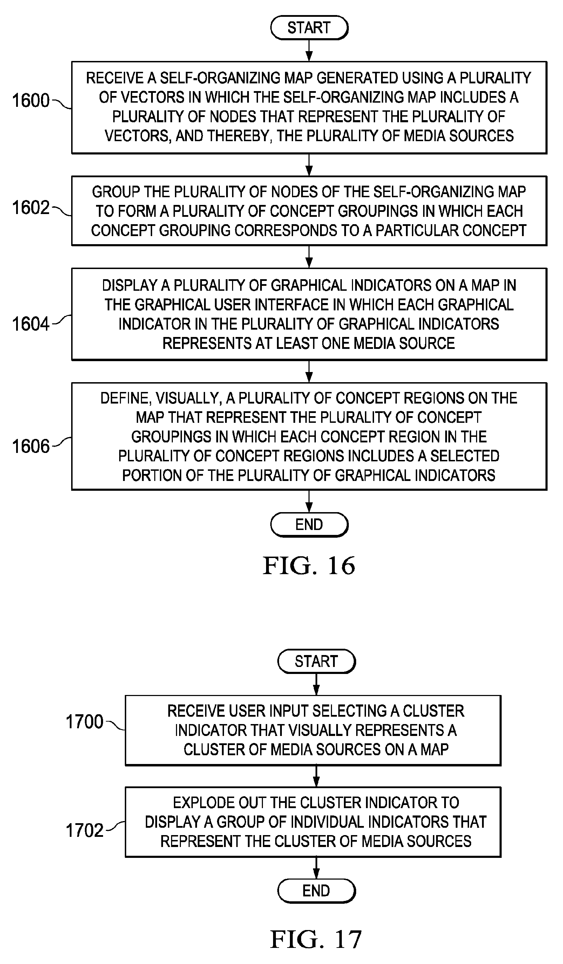

With reference now to **Figure 16****,** an illustration of a process for displaying a visual representation of content in a plurality of media sources is depicted in the form of a flowchart in accordance with an illustrative embodiment. The process illustrated in **Figure 16** may be implemented using map manager **120** in **Figures 1** and **3****.**

The process may begin by receiving a self-organizing map generated using a plurality of vectors in which the self-organizing map includes a plurality of nodes that represent a plurality of vectors, and thereby, a plurality of media sources (operation **1600**). In one illustrative example, the self-organizing map may be self-organizing map **310** generated by self-organizing map generator **306** in **Figure 3****.** The plurality of nodes of the self-organizing map are grouped to form a plurality of concept groupings in which each concept grouping corresponds to a particular concept (operation **1602**).

A plurality of graphical indicators are displayed on a map in the graphical user interface in which each graphical indicator in the plurality of graphical indicators represents at least one media source (operation **1604**). In operation **1604,** the plurality of graphical indicators may include cluster indicators based on the zoom level of the map.

A plurality of concept regions that represent the plurality of concept groupings are visually defined on the map in which each concept region includes a selected portion of the plurality of graphical indicators (operation **1606**), with the process terminating thereafter. Each concept region in operation **1606** may be visually defined by, for example, without limitation, graphical boundary lines. A concept region may share one or more graphical indicators with another concept region, in some illustrative examples.

With reference now to **Figure 17****,** an illustration of a process for transforming a visual representation of content in a graphical user interface is depicted in the form of a flowchart in accordance with an illustrative embodiment. The process illustrated in **Figure 17** may be implemented using map manager **120** in **Figures 1** and **3****.**

The process begins by receiving user input selecting a cluster indicator that visually represents a cluster of media sources on a map (operation **1700**). In response to receiving this selection, the cluster indicator is exploded out to display a group of individual indicators that represent the cluster of media sources (operation **1702**), with the process terminating thereafter.

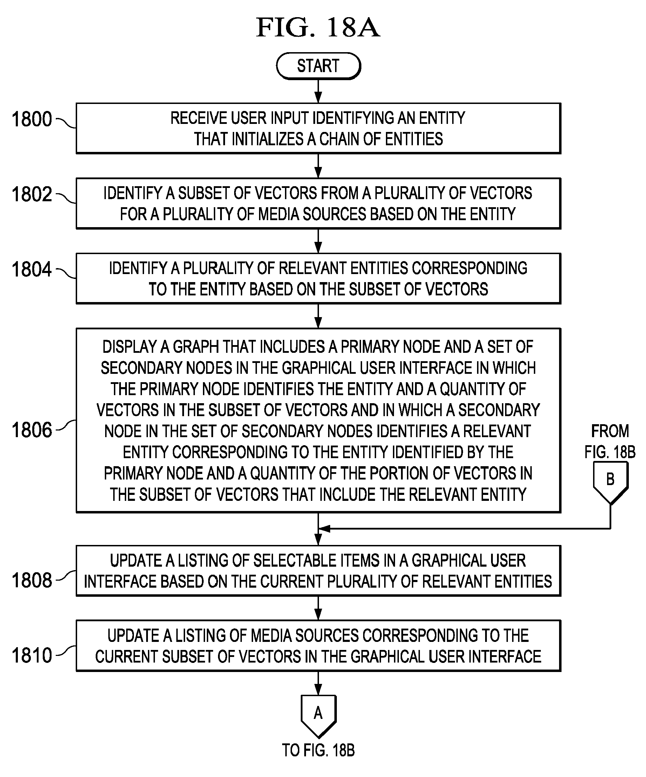

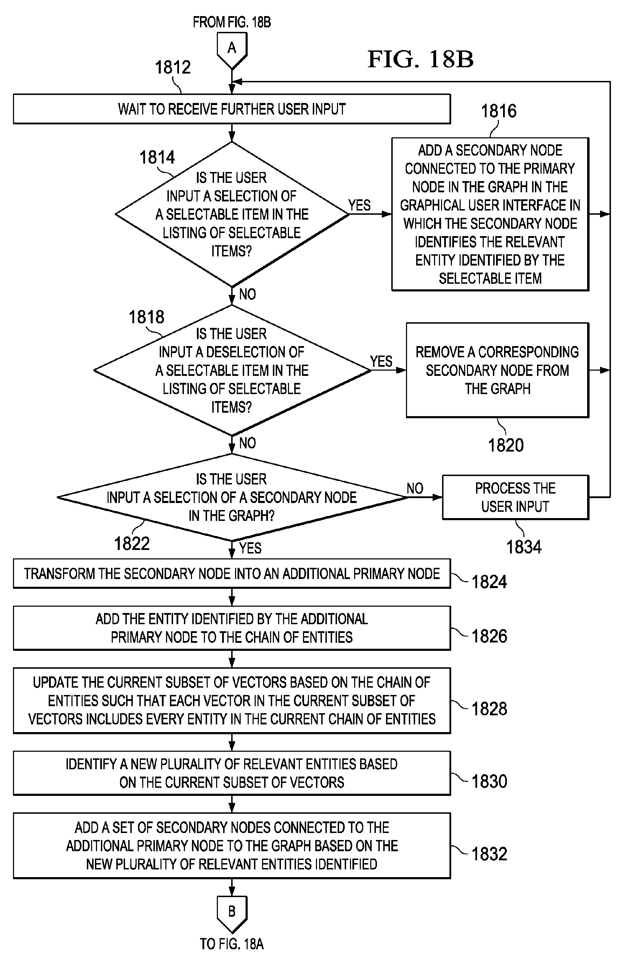

With reference now to **Figures 18A** and **18B****,** illustrations of a process for facilitating user-driven navigation through content in a plurality of media sources is depicted in the form of a flowchart in accordance with an illustrative embodiment. The process illustrated in **Figures 18A** and **18B** may be implemented using content diver **118** in **Figures 1-2****.**

The process begins by receiving user input identifying an entity that initializes a chain of entities (operation **1800**). A subset of vectors are identified from a plurality of vectors for a plurality of media sources based on the entity (operation **1802**). Next, a plurality of relevant entities corresponding to the entity are identified based on the subset of vectors (operation **1804**). In operation **1804,** the plurality of relevant entities may include all other distinct entities in the subset of vectors.

A graph that includes a primary node and a set of secondary nodes is displayed in the graphical user interface in which the primary node identifies the entity and a quantity of vectors in the subset of vectors and in which a secondary node in the set of secondary nodes identifies a relevant entity corresponding to the entity identified by the primary node and a quantity of the portion of vectors in the subset of vectors that include the relevant entity (operation **1806**)**.** In operation **1806,** the primary node may be an initial primary node in a chain of primary nodes.

A listing of selectable items is updated in a graphical user interface based on the current plurality of relevant entities (operation **1808**). In operation **1808,** this updating may include the first display of this listing of selectable items. Further, in operation **1808,** each selectable item in the listing of selectable items identifies a corresponding relevant entity.

A listing of media sources corresponding to the current subset of vectors is updated in the graphical user interface (operation **1810**). In operation **1810,** this updating may include the first display of this listing of media sources.

Thereafter, the process waits to receive further user input (operation **1812**). A determination is made as to whether the user input is a selection of a selectable item in the listing of selectable items (operation **1814**). If the selection is of a selectable item in the listing of selectable items, the process adds a secondary node connected to the primary node in the graph in the graphical user interface in which the secondary node identifies the relevant entity identified by the selectable item (operation **1816**). The process then returns to operation **1812.**

With reference again to operation **1814,** if the selection is not of a selectable item in the listing of selectable items, a determination is made as to whether the user input is a deselection of a selectable item in the listing of selectable items (operation **1818**). If the user input is a deselection, the process removes a corresponding secondary node from the graph (operation **1820**), with the process then returning to operation **1812.**

Otherwise, if the user input is not a deselection, the process determines whether the user input is a selection of a secondary node in the graph (operation **1822**). If the user input is a selection of a secondary node in the graph, the secondary node is transformed into an additional primary node (operation **1824**). In operation **1824,** this additional primary node is added to the chain of primary nodes in the graph. The entity identified by the additional primary node is added to the chain of entities (operation **1826**).

Thereafter, the current subset of vectors is updated based on the chain of entities such that each vector in the current subset of vectors includes every entity in the current chain of entities (operation **1828**). A new plurality of relevant entities is identified based on the current subset of vectors (operation **1830**). A set of secondary nodes connected to the additional primary node is added to the graph based on the new plurality of relevant entities identified (operation **1832**), with the process retuning to operation **1808** described above.

With reference again to operation **1822,** if the user input is not a selection of a secondary node, the process otherwise processes the user input (operation **1834**) and proceeds to operation **1812** described above. In some cases, the user input may indicate that the process of navigating through the content in the media sources is to be terminated. In these particular cases, processing the user input terminates the overall process in **Figures 18A** and **18B****.**

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

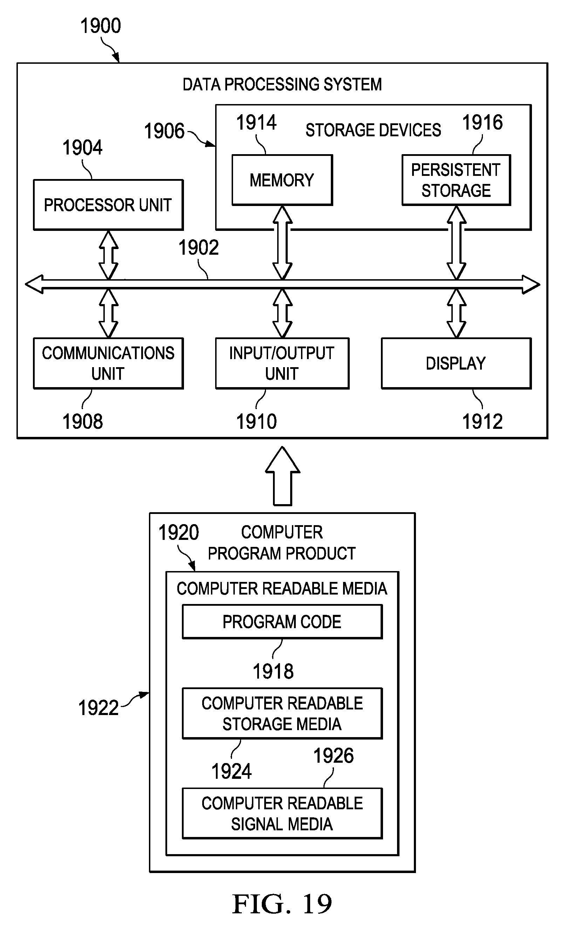

Turning now to **Figure 19****,** an illustration of a data processing system in the form of a block diagram is depicted in accordance with an illustrative embodiment. Data processing system **1900** may be used to implement computer system **102** in **Figure 1****.** As depicted, data processing system **1900** includes communications framework **1902,** which provides communications between processor unit **1904,** storage devices **1906,** communications unit **1908,** input/output unit **1910,** and display **1912.** In some cases, communications framework **1902** may be implemented as a bus system.

Processor unit **1904** is configured to execute instructions for software to perform a number of operations. Processor unit **1904** may comprise a number of processors, a multi-processor core, and/or some other type of processor, depending on the implementation. In some cases, processor unit **1904** may take the form of a hardware unit, such as a circuit system, an application specific integrated circuit (ASIC), a programmable logic device, or some other suitable type of hardware unit.

Instructions for the operating system, applications, and/or programs run by processor unit **1904** may be located in storage devices **1906.** Storage devices **1906** may be in communication with processor unit **1904** through communications framework **1902.** As used herein, a storage device, also referred to as a computer readable storage device, is any piece of hardware capable of storing information on a temporary and/or permanent basis. This information may include, but is not limited to, data, program code, and/or other information.

Memory **1914** and persistent storage **1916** are examples of storage devices **1906.** Memory **1914** may take the form of, for example, a random access memory or some type of volatile or nonvolatile storage device. Persistent storage **1916** may comprise any number of components or devices. For example, persistent storage **1916** may comprise a hard drive, a flash memory, a rewritable optical disk, a rewritable magnetic tape, or some combination of the above. The media used by persistent storage **1916** may or may not be removable.

Communications unit **1908** allows data processing system **1900** to communicate with other data processing systems and/or devices. Communications unit **1908** may provide communications using physical and/or wireless communications links.

Input/output unit **1910** allows input to be received from and output to be sent to other devices connected to data processing system **1900.** For example, input/output unit **1910** may allow user input to be received through a keyboard, a mouse, and/or some other type of input device. As another example, input/output unit **1910** may allow output to be sent to a printer connected to data processing system **1900.**

Display **1912** is configured to display information to a user. Display **1912** may comprise, for example, without limitation, a monitor, a touch screen, a laser display, a holographic display, a virtual display device, and/or some other type of display device.

In this illustrative example, the processes of the different illustrative embodiments may be performed by processor unit **1904** using computer-implemented instructions. These instructions may be referred to as program code, computer usable program code, or computer readable program code and may be read and executed by one or more processors in processor unit **1904.**

In these examples, program code **1918** is located in a functional form on computer readable media **1920,** which is selectively removable, and may be loaded onto or transferred to data processing system **1900** for execution by processor unit **1904.** Program code **1918** and computer readable media **1920** together form computer program product **1922.** In this illustrative example, computer readable media **1920** may be computer readable storage media **1924** or computer readable signal media **1926.**

Computer readable storage media **1924** is a physical or tangible storage device used to store program code **1918** rather than a medium that propagates or transmits program code **1918.** Computer readable storage media **1924** may be, for example, without limitation, an optical or magnetic disk or a persistent storage device that is connected to data processing system **1900.**

Alternatively, program code **1918** may be transferred to data processing system **1900** using computer readable signal media **1926.** Computer readable signal media **1926** may be, for example, a propagated data signal containing program code **1918.** This data signal may be an electromagnetic signal, an optical signal, and/or some other type of signal that can be transmitted over physical and/or wireless communications links.
The illustration of data processing system **1900** in **Figure 19** is not meant to provide architectural limitations to the manner in which the illustrative embodiments may be implemented. The different illustrative embodiments may be implemented in a data processing system that includes components in addition to or in place of those illustrated for data processing system **1900.** Further, components shown in **Figure 19** may be varied from the illustrative examples shown.

Further, the disclosure comprises embodiments according to the following clauses:
Clause 1. An apparatus comprising:
   a display module that is implemented in a computer system and configured to display a graphical user interface;
   a vector generator module that is implemented in the computer system and configured to generate a plurality of vectors for a plurality of media sources based on content in the plurality of media sources and a lexicon that is built for a selected subject,
      wherein the plurality of vectors include elements that represent matches between base entities in the lexicon and extracted entities from the content in the plurality of media sources; and
   a visualizer module that is implemented in the computer system, coupled to the vector generator module and the display module, and configured to display a visual representation of the content in the plurality of media sources in the graphical user interface,
      wherein the plurality of vectors and the graphical user interface are configured to enable a user to navigate through the content; and
      wherein the visualizer module is further configured to visually transform the visual representation of the content in the graphical user interface in real-time based on user input.
Clause 2. The apparatus of clause 1, wherein an element in a vector in the plurality of vectors for a corresponding media source in the plurality of media sources represents a match between an extracted entity from the corresponding media source and a base entity in the lexicon.
Clause 3. The apparatus of clause 1, wherein the graphical user interface comprises:
   a graph area for visually presenting a graph that includes a primary node, wherein the primary node identifies a base entity and a quantity for a subset of vectors in the plurality of vectors that include the base entity.
Clause 4. The apparatus of clause 3, wherein the graph further includes a set of secondary nodes, wherein a secondary node in the set of secondary nodes identifies a relevant entity corresponding to the base entity identified by the primary node and a quantity of a portion of vectors in the subset of vectors that include the relevant entity.
Clause 5. The apparatus of clause 1, wherein the graphical user interface comprises:
   a selection area for displaying a listing of selectable items, wherein a selection of a selectable item modifies a graph displayed in a graph area of the graphical user interface.
Clause 6. A computer-implemented electronic media content navigation system comprising:
   a display module that is implemented in a computer system and configured to display a graphical user interface;
   a data structure storing a lexicon that is built for a selected subject;
   a vector generator module that is implemented in the computer system and configured to access a plurality of media sources through a computer network and generate a plurality of vectors for the plurality of media sources based on the lexicon and content in the plurality of media sources,
      wherein the plurality of vectors include elements that represent matches between base entities in the lexicon and extracted entities from the content in the plurality of media sources; and
   a visualizer module that is implemented in the computer system, coupled to the vector generator module and the display module, and configured to display a visual representation of the content in the plurality of media sources in the graphical user interface,
      wherein the plurality of vectors and the graphical user interface are configured to enable a user to navigate through the content; and
      wherein the visualizer module is further configured to visually transform the visual representation of the content in the graphical user interface in real-time based on user input.
Clause 7. A method for visually representing content in a plurality of media sources, the method comprising:
   creating, by a computer system, a plurality of vectors for the plurality of media sources based on content in the plurality of media sources and a lexicon built for a selected subject, wherein the plurality of vectors include elements that represent matches between base entities in the lexicon and extracted entities from the content in the plurality of media sources;
   displaying, by the computer system, a visual representation of the content in the plurality of media sources based on the plurality of vectors through a graphical user interface that is configured to enable a user to navigate through the content; and
   transforming, by the computer system, the visual representation of the content in the graphical user interface in real-time based on user input such that changes to the visual representation of the content in the graphical user interface visually track the user navigating through the content.
Clause 8. The method of clause 7, wherein creating, by the computer system, the plurality of vectors comprises:
   comparing the content in a media source to a collection of base entities in the lexicon; and
   adding an element to a vector for the media source for each match found between the content and a base entity in the collection of base entities in the lexicon.
Clause 9. The method of clause 8, wherein comparing the content in the media source to the collection of base entities comprises:
   extracting a plurality of extracted entities from the media sources; and
   comparing an extracted entity in the plurality of extracted entities to the collection of base entities to determine whether a match is present between the extracted entity and any base entity in the collection of base entities.
Clause 10. The method of clause 7, wherein displaying, by the computer system, the visual representation of the content comprises:
   displaying a graph within a graph area in the graphical user interface, wherein the graph includes a primary node that identifies a base entity and a quantity of a subset of vectors in the plurality of vectors that include the base entity.
Clause 11. The method of clause 10, wherein displaying the graph comprises:
   displaying a set of secondary nodes connected to the primary node in the graph in the graphical user interface, wherein a secondary node in the set of secondary nodes identifies a relevant entity that is related to the base entity identified by the primary node and a quantity for a portion of the subset of vectors that include the relevant entity.
Clause 12. The method of clause 7, wherein displaying, by the computer system, the visual representation of the content comprises:
   displaying a listing of selectable items within a selection area in the graphical user interface,
      wherein a selection of a selectable item in the listing of selectable items modifies a graph displayed in a graph area of the graphical user interface.
Clause 13. The method of clause 7, wherein transforming, by the computer system, the visual representation of the content comprises:
   identifying a subset of vectors from the plurality of vectors that includes an entity selected based on the user input; and
   identifying a plurality of relevant entities corresponding to the entity based on the subset of vectors.
Clause 14. The method of clause 13, wherein transforming, by the computer system, the visual representation of the content further comprises:
   updating a listing of selectable items in a selection area in the graphical user interface based on the plurality of relevant entities identified.
Clause 15. The method of clause 13, wherein transforming, by the computer system, the visual representation of the content further comprises:
   updating a graph in a graph area in the graphical user interface based on the entity selected by the user input and a portion of the plurality of relevant entities identified.
Clause 16. The method of clause 7, wherein displaying, by the computer system, the visual representation of the content comprises:
   grouping a plurality of nodes of a self-organizing map to form a plurality of concept groupings, wherein the self-organizing map is generated based on the plurality of vectors;
   displaying a plurality of graphical indicators on a map in the graphical user interface in which each graphical indicator in the plurality of graphical indicators represents at least one media source in the plurality of media sources; and
   defining, visually, a plurality of concept regions on the map that represent the plurality of concept groupings, wherein each concept region in the plurality of concept regions includes a selected portion of the plurality of graphical indicators.
Clause 17. The method of clause 16, wherein transforming, by the computer system, the visual representation of the content further comprises:
   zooming into the map from a current zoom level to a new zoom level based on a zoom input received through the graphical user interface; and
   updating the plurality of graphical indicators displayed on the map based on the new zoom level.
Clause 18. The method of clause 16, wherein transforming, by the computer system, the visual representation of the content further comprises:
   exploding out a cluster indicator based on the user input to visually represent a cluster of media sources represented by the cluster indicator.
Clause 19. The method of Clause 7 further comprising:
   displaying, by the computer system, a graphical presentation of a snapshot of the content in a portion of the plurality of media sources in the graphical user interface; and
   updating, by the computer system, the graphical user interface as new content from the plurality of media sources is obtained.
Clause 20. The method of Clause 7 further comprising:
   building, by the computer system, the lexicon for the selected subject using at least one of user-specified factors, historical data, or a predetermined ontology.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus comprising:
a display module that is implemented in a computer system (102) and configured to display a graphical user interface (112);
a vector generator (116) module that is implemented in the computer system (102) and configured to generate a plurality of vectors (122)for a plurality of media sources (106) based on content (104) in the plurality of media sources (106) and a lexicon (132) that is built for a selected subject (133),
wherein the plurality of vectors (122) include elements that represent matches between base entities in the lexicon (132) and extracted entities from the content (104) in the plurality of media sources (106); and
a visualizer (117) module that is implemented in the computer system (102), coupled to the vector generator (116) module and the display module, and configured to display a visual representation (110) of the content (104) in the plurality of media sources (106) in the graphical user interface (112),
wherein the plurality of vectors (122) and the graphical user interface (112) are configured to enable a user to navigate through the content (104); and
wherein the visualizer (117) module is further configured to visually transform the visual representation (110) of the content (104) in the graphical user interface (112) in real-time based on user input (207).

2. The apparatus of claim 1, wherein an element (144) in a vector (124) in the plurality of vectors (122) for a corresponding media source (108) in the plurality of media sources (106) represents a match (142) between an extracted entity (140) from the corresponding media source (108) and a base entity (138) in the lexicon (132).

3. The apparatus of claims 1 or 2, wherein the graphical user interface (112) comprises:
a graph area (202) for visually presenting a graph (220) that includes a primary node (222), wherein the primary node (222) identifies a base entity (138) and a quantity for a subset of vectors (210) in the plurality of vectors (122) that include the base entity (138); and
wherein the graph (220) further includes a set of secondary nodes (224), wherein a secondary node in the set of secondary nodes (224) identifies a relevant entity corresponding to the base entity (138) identified by the primary node (222) and a quantity of a portion of vectors in the subset of vectors (210) that include the relevant entity.

4. The apparatus of claims 1 or 2, wherein the graphical user interface (112) comprises:
a selection (201) area for displaying a listing of selectable items (206), wherein a selection of a selectable item modifies a graph (220) displayed in a graph area (202) of the graphical user interface (112).

5. A method for visually representing content (104) in a plurality of media sources (106), the method comprising:
Creating (1400), by a computer system (102), a plurality of vectors (122) for the plurality of media sources (106) based on content (104) in the plurality of media sources (106) and a lexicon (132) built for a selected subject (133), wherein the plurality of vectors (122) include elements that represent matches between base entities in the lexicon (132) and extracted entities from the content (104) in the plurality of media sources (106);
Displaying (1402), by the computer system (102), a visual representation (110) of the content (104) in the plurality of media sources (106) based on the plurality of vectors (122) through a graphical user interface (112) that is configured to enable a user to navigate through the content (104); and
Transforming (1404), by the computer system (102), the visual representation (110) of the content (104) in the graphical user interface (112) in real-time based on user input (207) such that changes to the visual representation (110) of the content (104) in the graphical user interface (112) visually track the user navigating through the content (104).

6. The method of claim 5, wherein creating (1400), by the computer system (102), the plurality of vectors (122) comprises:
comparing (1502) the content (104) in a media source (108) to a collection of base entities (136) in the lexicon (132); and
adding (1504) an element (144) to a vector (124) for the media source (108) for each match found between the content (104) and a base entity in the collection of base entities (136) in the lexicon (132); and
wherein comparing (1502) the content (104) in the media source (108) to the collection of base entities (136) comprises:
extracting a plurality of extracted entities (130) from the media sources (106); and
comparing an extracted entity (140) in the plurality of extracted entities (130) to the collection of base entities (136) to determine whether a match is present between the extracted entity (140) and any base entity in the collection of base entities (136).

7. The method of claims 5 or 6, wherein displaying (1402), by the computer system (102), the visual representation (110) of the content (104) comprises:
displaying a graph (220) within a graph area (202) in the graphical user interface (112), wherein the graph (220) includes a primary node (222) that identifies a base entity (138) and a quantity of a subset of vectors (210)in the plurality of vectors (122) that include the base entity (138); and
wherein displaying the graph (220) comprises:
displaying a set of secondary nodes (224) connected to the primary node (222) in the graph (220) in the graphical user interface (112), wherein a secondary node in the set of secondary nodes (224) identifies a relevant entity that is related to the base entity (138) identified by the primary node (222) and a quantity for a portion of the subset of vectors (210) that include the relevant entity.

8. The method of any one of claims 5-7, wherein displaying 1402), by the computer system (102), the visual representation (110) of the content (104) comprises:
displaying a listing of selectable items (206) within a selection area (201) in the graphical user interface (112),
wherein a selection of a selectable item in the listing of selectable items (206) modifies a graph(220)displayed in a graph area (202) of the graphical user interface (112).

9. The method of any one of claim 5-8, wherein transforming (1404), by the computer system (102), the visual representation (110) of the content (104) comprises:
identifying a subset of vectors (210) from the plurality of vectors (122) that includes an entity (208) selected based on the user input (207); and
identifying a plurality of relevant entities (214) corresponding to the entity (208) based on the subset of vectors (210); and
wherein transforming (1404), by the computer system (102), the visual representation (110) of the content (104) further comprises:
updating a listing of selectable items in a selection area in the graphical user interface (112) based on the plurality of relevant entities (214) identified.

10. The method of claim 9, wherein transforming (1404), by the computer system (102), the visual representation (110) of the content (104) further comprises:
updating a graph (220) in a graph area (202) in the graphical user interface (112) based on the entity (208) selected by the user input (207) and a portion of the plurality of relevant entities (214) identified.

11. The method of any one of claims 5-10, wherein displaying (1402), by the computer system (102), the visual representation (110) of the content (104) comprises:
grouping a plurality of nodes (311) of a self-organizing map (306) to form a plurality of concept groupings (316), wherein the self-organizing map (306) is generated based on the plurality of vectors (122);
displaying a plurality of graphical indicators (318) on a map (302) in the graphical user interface (112) in which each graphical indicator in the plurality of graphical indicators (318) represents at least one media source in the plurality of media sources (106); and
defining, visually, a plurality of concept regions (332) on the map (302) that represent the plurality of concept groupings (316), wherein each concept region in the plurality of concept regions (332) includes a selected portion of the plurality of graphical indicators.

12. The method of claim 11, wherein transforming (1404), by the computer system (102), the visual representation (110) of the content (104) further comprises:
zooming into the map (302) from a current zoom level to a new zoom level based on a zoom input received through the graphical user interface (112); and
updating the plurality of graphical indicators displayed on the map based on the new zoom level.

13. The method of claims 11 or 12, wherein transforming (1404), by the computer system (102), the visual representation (110) of the content (104) further comprises:
exploding out a cluster indicator (328) based on the user input (207) to visually represent a cluster of media sources represented by the cluster indicator (328).

14. The method of any one of claims 5-13, further comprising:
displaying, by the computer system (102), a graphical presentation of a snapshot of the content (104) in a portion of the plurality of media sources (106) in the graphical user interface (112); and
updating, by the computer system (102), the graphical user interface (112) as new content (104) from the plurality of media sources (106) is obtained.

15. The method of any one of claims 5-14 further comprising:
building, by the computer system (102), the lexicon (132) for the selected subject (133) using at least one of user-specified factors, historical data, or a predetermined ontology.
